# EUROPEAN PATENT SPECIFICATION

(11) **EP 4 531 316 B1**
(45) Date of publication and mention of the grant of the patent: **08.04.2026**
(21) Application number: 23200862.3
(22) Date of filing: 29.09.2023
(51) Int. Cl.: H04L 1/1829, H04L 1/1867, H04L 1/1822

(54) **APPARATUS, METHOD, AND COMPUTER PROGRAM FOR RETRANSMITTING DATA**
VORRICHTUNG, VERFAHREN UND COMPUTERPROGRAMM ZUR NEUÜBERTRAGUNG VON DATEN
APPAREIL, PROCÉDÉ ET PROGRAMME INFORMATIQUE POUR LA RETRANSMISSION DE DONNÉES

(43) Date of publication of application: 02.04.2025
(73) Proprietor: Nokia Technologies Oy, 02610 Espoo (FI)
(72) Inventor: AMIRI, Abolfazl, 9210 Aalborg (DK); KOLDING, Troels Emil, 9270 Klarup (DK)
(74) Representative: Page White Farrer

(56) References cited:
- AU-B2- 2018 407 354
- ERICSSON: "Local HARQ feedback in the receiver side", 3GPP DRAFT; R2-080092 LOCAL HARQ FEEDBACK IN THE RECEIVER SIDE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Sevilla, Spain; 20080107, 7 January 2008 (2008-01-07), XP050137984
- ERICSSON: "HARQ-ARQ Interactions for NACK I ACK error", 3GPP DRAFT; R2-071346, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. St. Julian; 20070322, 22 March 2007 (2007-03-22), XP050134292

## Description

### Technical Field

Various examples described in this subject disclosure generally relate to apparatus, methods, and computer programs, and more particularly (but not exclusively) to apparatus, methods and computer programs for retransmitting data.

### Background

**A** communication system can be seen as a facility that enables communication sessions between two or more entities such as communication devices, base stations and/or other nodes by providing carriers between the various entities involved in the communications path.

**The** communication system may be a wireless communication system. Examples of wireless systems comprise public land mobile networks (PLMN) operating based on radio standards such as those provided by 3GPP, satellite based communication systems and different wireless local networks, for example wireless local area networks (WLAN). The wireless systems can typically be divided into cells, and are therefore often referred to as cellular systems.

The communication system and associated devices operate in accordance with a given set of standards or specifications that set out what the various entities associated with the system are permitted to do and how that is to be achieved. Communication protocols and/or parameters that are to be used for the connection are also typically defined. Examples of standards are the so-called 5G standards.

Communications between different communication devices in a communication system may be controlled between a plurality of corresponding and different protocol stacks comprised in each device. For example, where a data packet is to be retransmitted because it has not been successfully received and/or decoded at a receiver, the retransmission of this data packet may be controlled by at least one protocol layer.

Issues can arise when there are a plurality of protocol layers that are each configured with a respective retransmission mechanism for causing retransmission of a missing data packet. For example, there may be unnecessary latency introduced into the communication system when these retransmission mechanisms are deployed in series.
ERICSSON: "Local HARQ feedback in the receiver side", 3GPP Draft, R2-080092 relates to a discussion on whether a HARQ receiver notifies the RLC receiver if a failed TB transmission is detected.
ERICSSON: "HARQ-ARQ interactions for NACK | ACK error", 3GPP Draft; R2-071346 relates to the tight coupling between L1/L2 control signalling, scheduling mechanisms and HARQ operation, and discloses that HARQ-ARQ interaction should not be discussed in isolation, but rather in conjunction with control signalling and scheduling concepts.
Australian patent publication number AU 2018407354 B2 relates to a method for processing a radio link failure by triggering, by the terminal, a communication failure process according to a configuration of the RLC layer entity, when the RLC layer entity reaches a maximum number of retransmission times.

### Summary

Several aspects of the various examples described in the subject disclosure are detailed as follows:
According to a first aspect, there is provided an apparatus according to claim 1.

According to a second aspect, there is provided an apparatus according to claim 7.

According to a fifth aspect, there is provided a method performed by an apparatus according to claim 9.

According to a sixth aspect, there is provided a method performed by an apparatus according to claim 10.

According to a seventh aspect, there is provided a computer readable medium according to claim 11.

According to an eighth aspect, there is provided a computer readable medium according to claim 12.

In the above, many different embodiments have been described. It should be appreciated that further embodiments may be provided by the combination of any two or more of the embodiments described above. The invention is defined by the appended claims.

### Brief Description of FIGs.

Some examples, will now be described, merely by way of illustration only, with reference to the accompanying drawings in which:
FIG. 1 shows a schematic representation of a 5G system;
FIG. 2 shows a schematic representation of a network apparatus;
FIG. 3 shows a schematic representation of a user equipment;
FIG. 4 illustrates retransmission mechanisms deployable at multiple protocol layers;
**FIG.** 5 illustrates signalling between protocol layers of a transmitter and a receiver;
FIG. 6 illustrates example operations that may be performed by apparatus described herein;
**FIGS.** 7 and 8 illustrates example signalling that may be performed by apparatus described herein; and
FIGS. 9 and 10 illustrate operations that may be performed by apparatus described herein.

### Detailed Description

**The** following considers situations in which a retransmission mechanism is deployed at a radio link control (RLC) protocol layer.

In particular, the following aims to provide mechanisms for reducing the amount of time taken for a retransmission mechanism to be deployed at the RLC protocol layer relative to the current time taken. Stated differently, the following aims to improve the latency associated with retransmission mechanisms currently deployed at the RLC protocol layer.

In general, this is achieved by configuring at least part of a receiver's RLC protocol layer to enter an "alert" state when the receiver determines that transmission and/or retransmission procedures at the Physical (PHY) and/or Medium access Control (MAC) protocol layer have been completed in respect of at least one missing transport block. A transport block may be considered to be a fundamental payload that is passed between the transmitter and receiver at the MAC and/or PHY protocol layers. A transport block may be considered as missing when it is not successfully received at the MAC and/or PHY protocol layers.

In this alert state, the RLC protocol layer monitors for at least one trigger event to occur. For example, the trigger event may comprise receipt of a protocol data unit (PDU) comprising a sequence number that is different to a sequence number associated with the missing transport block (e.g., the sequence number is different to an expected sequence number). As another example, the trigger even may comprise the expiry of a timer that was initialised when the RLC protocol layer entered the alert state.

When it is determined that at least one of the trigger events has occurred, the receiver RLC protocol layer signals the transmitter RLC protocol layer an indication that the missing transport block has not been successfully received by the receiver. The transmitter RLC protocol layer may subsequently (e.g., in response to receipt of this indication) cause the data comprised in the missing packet to be retransmitted in accordance with an RLC protocol layer retransmission procedure.

Further illustration of how this may be achieved is provided below.

In the following examples, certain aspects are explained with reference to devices that are often configured to communicate via a wireless cellular system and mobile communication systems serving such mobile communication devices. For brevity and clarity, the following describes such aspects with reference to a 5G wireless communication system. However, it is understood that such aspects are not limited to 5G wireless communication systems, and may, for example, be applied to other wireless communication systems (for example, current 6G proposals, IEEE 802.11, etc.).

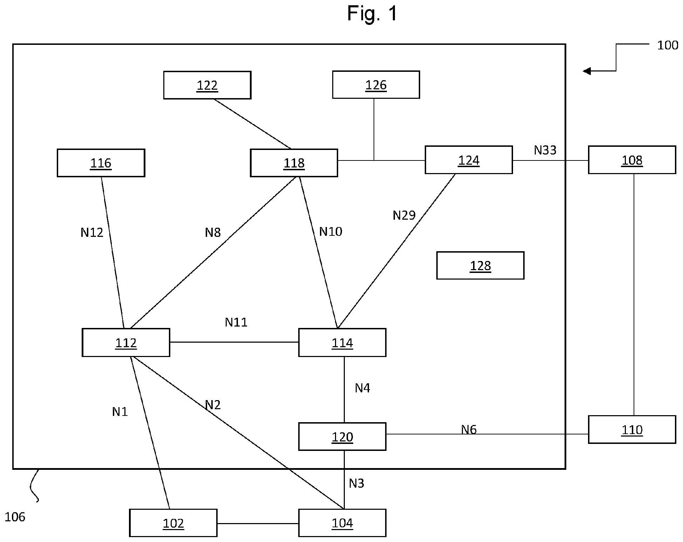

Before describing in detail the examples, certain facets of a 5G wireless communication system are briefly explained with reference to FIG. 1.

3GPP standards defined a service-based architecture in 5G, which is expected to be utilized in 6G and beyond. In a service-based architecture, a modular framework is used in which common applications can be deployed using components from different sources and/or suppliers.

FIG. 1 shows a schematic representation of a 5G system (5GS) 100. The 5GS may comprise a user equipment (UE) 102 (which may also be referred to as a communication device or a terminal), a 5G access network (AN) (which may be a 5G Radio Access Network (RAN) or any other type of 5G AN such as a Non-3GPP Interworking Function (N3IWF) /a Trusted Non-3GPP Gateway Function (TNGF) for Untrusted / Trusted Non-3GPP access or Wireline Access Gateway Function (W-AGF) for Wireline access) 104, a 5G core (5GC) 106, one or more application functions (AF) 108 and one or more data networks (DN) 110.

**The** 5G RAN may comprise one or more gNodeB (gNB) distributed unit functions connected to one or more gNodeB (gNB) unit functions. The RAN may comprise one or more access nodes.

The 5GC 106 may comprise one or more Access and Mobility Management Functions (AMF) 112, one or more Session Management Functions (SMF) 114, one or more authentication server functions (AUSF) 116, one or more Unified Data Management (UDM) functions 118, one or more User Plane Functions (UPF) 120, one or more Unified Data Repository (UDR) functions 122, one or more Network Repository Functions (NRF) 128, and/or one or more Network Exposure Functions (NEF) 124. The role of an NEF is to provide secure exposure of network services (e.g. voice, data connectivity, charging, subscriber data, and so forth) towards a 3rd party. Although NRF 128 is not depicted with its interfaces, it is understood that this is for clarity reasons and that NRF 128 may have a plurality of interfaces with other network functions. Likewise, other network functions of the 5GC 106 may include one or more further interfaces with each other that are not depicted in FIG. 1.

The 5GC 106 also comprises a network data analytics function (NWDAF) 126. The NWDAF is responsible for providing network analytics information upon request from one or more network functions or apparatus within the network. Network functions can also subscribe to the NWDAF 126 to receive information therefrom. Accordingly, the NWDAF 126 is also configured to receive and store network information from one or more network functions or apparatus within the network. The data collection by the NWDAF 126 may be performed based on at least one subscription to the events provided by the at least one network function.

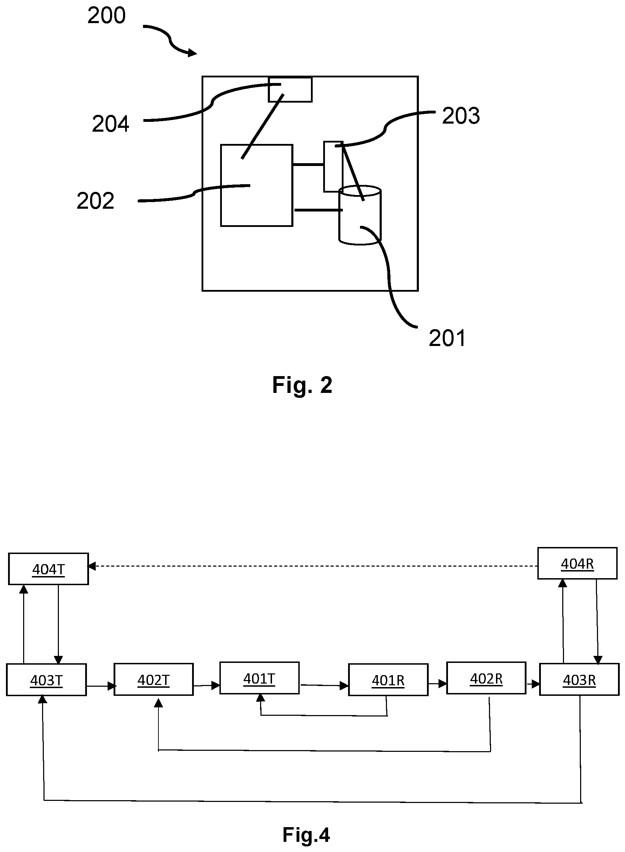

FIG. 2 shows an example of a control apparatus for a communication system, for example to be coupled to and/or for controlling a station of an access system, such as a RAN node, e.g. a base station, gNB, a central unit of a cloud architecture or a node of a core network such as an Mobility Management Entity (MME) or Serving Gateway (S-GW), a scheduling entity such as a spectrum management entity, or a server or host, for example an apparatus hosting a Network Repository Function (NRF), Network Data Analytics Function (NWDAF), Access and Mobility Management Function (AMF), Session Management Function (SMF), Unified Data Management/Unified Data Repository (UDM/UDR), and so forth. The control apparatus may be integrated with or external to a node or module of a core network or Radio Access Network (RAN). In some examples, base stations comprise a separate control apparatus unit or module. In other examples, the control apparatus can be another network element, such as a radio network controller or a spectrum controller. The control apparatus 200 can be configured to provide control on communications in the service area of the system. The apparatus 200 comprises at least one memory 201, at least one data processing unit 202, 203 and an input/output interface 204. Via the interface, the control apparatus 200 can be coupled to a receiver and a transmitter of the apparatus. The receiver and/or the transmitter may be implemented as a radio front end or a remote radio head. For example, the control apparatus 200 or processor 201 can be configured to execute an appropriate software code to provide the control functions. References to "code" herein are understood to refer to software code, and vice versa.

The station of the access system may be categorized into two different types: distributed units (DUs), and centralized units (CUs).

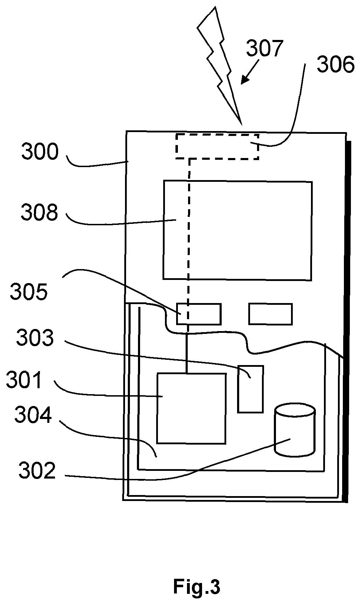

**An** example wireless communication device will now be described in more detail with reference to FIG. 3 showing a schematic, partially sectioned view of a communication device 300. Such a communication device may, in some examples, be referred to as a user equipment (UE) or terminal. An appropriate mobile communication device may, however, be provided by any device capable of sending and receiving radio signals. Non-limiting and illustrative examples comprise a mobile station (MS) or mobile device such as a mobile phone or what is referred to as a 'smart phone', a vehicle, a robot, an unmanned aerial vehicle (e.g., a drone), a computer provided with a wireless interface card or other wireless interface facility (e.g., USB dongle), personal data assistant (PDA) or a tablet provided with wireless communication capabilities, or any combinations of these or the like. A mobile communication device may provide, for example, communication of data for carrying communications such as voice, electronic mail (email), text message, multimedia and so on. Users may thus be offered and provided numerous services via their communication devices. Non-limiting and illustrative examples of these services comprise two-way or multi-way calls, data communication or multimedia services or simply an access to a data communications network system, such as the Internet. Users may also be provided broadcast or multicast data. Non-limiting and illustrative examples of the content comprise downloads, television and radio programs, videos, advertisements, various alerts and/or other information.

A wireless communication device may, for example, be implemented as a mobile device or a stationary device, or a combination thereof. A mobile device is a device not fixed to a particular location, whereas a stationary device may be configured to be fixed to a particular location (or removably attached thereto). The wireless device may utilize human interaction for communication, or may not utilize human interaction for communication. As described herein, the terms UE or "user" are used to refer to any type of wireless communication device.

The wireless device 300 may receive signals over an air or radio interface 307 via appropriate apparatus for receiving and may transmit signals via appropriate apparatus for transmitting radio signals. In FIG. 3, a transceiver apparatus is designated schematically by block 306. The transceiver apparatus 306 may be provided, for example, by means of a radio part and associated antenna arrangement. The antenna arrangement may be arranged internally or externally to the wireless device.

A wireless device is typically provided with at least one data processing entity 301, at least one memory 302 and other possible components 303 for use in software code and hardware aided execution of tasks it is configured to perform, including control of access to and communications with access systems and other communication devices. The data processing, storage and other relevant control apparatus can be provided on an appropriate circuit board and/or in chipsets. This feature is denoted by reference 304. The user may control the operation of the wireless device by means of a suitable user interface such as keypad 305, voice commands, touch sensitive screen or pad, combinations thereof or the like. A display 308, a speaker and a microphone can be also provided. Furthermore, a wireless communication device may comprise appropriate connectors (either wired or' wireless) to other devices and/or for connecting external accessories, for example hands-free equipment, thereto.

The present disclosure relates to data recovery mechanisms performed between a transmitter and a receiver. It is understood that the transmitter and/or receiver mentioned herein may be located at various points of a communication network. For example, the transmitter and receiver may be comprised in respective UE (e.g., as described above in relation to FIG. 3). As another example, the transmitter may be located in a UE and the receiver may be located in a network node (e.g., as described above in relation to FIG. 2). As another example, the transmitter and receiver may be located in respective network nodes. For clarity and brevity throughout the following, the following examples may label the transmitter as being an access network node (e.g., a gNB) and the receiver as a UE. However, it is understood that the presently described mechanisms are not limited to these specific apparatus.

**The** transmitter and/or receiver may comprise a plurality of different types of data recovery loops that are used to ensure reliability of transmission of data between the transmitter and the receiver. These data recovery loops generally provide some mechanism for causing retransmission of data that has not been correctly received at the receiver. The data recovery loops are also referred to herein as retransmission mechanisms.

The data recovery loops may be deployable at respective protocol layers of the protocol stack. For example, at the PHY and/or MAC protocol layers, a Hybrid Automatic Repeat request (H-ARQ) process may be used to cause re-transmission of a missing data packet (e.g., a data packet that has not been received at all, and/or a data packet that has been incorrectly received). At the Radio Link Control (RLC) layer, an Automatic Repeat reQuest (ARQ) process may be used to cause retransmission of the missing data packet. RLC ARQ is a process that is used to recover packets that were not recovered by the lower layer HARQ procedure (e.g., due to time-outs and/or false-positive acknowledgement errors).

FIG. 4 illustrates example retransmission mechanisms that may be used as data recovery loops at different protocol layers.

FIG. 4 illustrates the following protocol layers at a transmitter side: a transmitter MAC/PHY protocol layer 401T, a transmitter RLC protocol layer 402T, a transmitter Packet Data Convergence Protocol (PDCP) protocol layer 403T, and a transmitter Transmission Control Protocol (TCP) protocol layer 404T.

**FIG.** 4 illustrates the following protocol layers at a receiver side: a receiver MAC/PHY protocol layer 401R, a receiver RLC protocol layer 402R, a receiver Packet Data Convergence Protocol (PDCP) protocol layer 403R, and a receiver Transmission Control Protocol (TCP) protocol layer 404R. FIG. 4 illustrates data being transmitted over a channel from the transmitter MAC/PHY protocol layer 401T to the receiver MAC/PHY protocol level 401R.

**The** MAC/PHY protocol layer may provide a first layer retransmission mechanism using some type of ARQ procedure (e.g., H-ARQ, ARQ, etc.). This may be performed at a per-transmission level of operation.

**The** RLC protocol layer may provide a second layer retransmission mechanism using some type of RLC Acknowledged Mode procedure. This may be performed within a predetermined window of time from the initial transmission and/or receipt of a negative acknowledgement (NACK).

**The** PDCP protocol layer may provide a third layer retransmission mechanism using some type of PDCP-based recovery mechanism (e.g., handover, multi-connectivity, etc.).

**The** TCP protocol layer may provide a fourth layer retransmission mechanism using some type of TCP-based recovery mechanism (e.g., TCP Acknowledged mode).

The RLC protocol layer is associated with a plurality of timers and state variables. The RLC protocol layer can be implemented in three modes, namely a transparent mode, an unacknowledged mode, and an acknowledged mode. The following is focused on the acknowledged mode. In general, the following techniques may be applied in respect of any RLC protocol layer retransmission mechanism in which an RLC protocol layer of a receiver causes a retransmission of a missing data packet from the transmitter to the receiver.

The RLC protocol layer can currently be implemented in three different modes, namely the transparent mode (TM), the unacknowledged mode (UM), and the acknowledged mode (AM). The following focuses on the AM.

In more detail, a transmitter RLC protocol layer receives an RLC Service Data Unit (SDU) from an upper protocol layer. It assigns the next available SN to this SDU. The transmitter RLC protocol layer sends an RLC header plus the RLC SDU to the MAC protocol layer for transmission to a receiver. This RLC header plus SDU is also referred to as a data PDU.

An AM Data PDU (e.g., from the transmitter) comprises an RLC header, which in turn contains the Sequence Number (SN) of the RLC Service Data Unit (SDU). SN and Segment Offset (SO) are header fields that help with acknowledgements and retransmissions. STATUS PDU is a type of control PDU signalled from the receiver to the transmitter.

**The** receiving side RLC acknowledges correctly received SDUs using an acknowledgement signal, and/or negatively acknowledges incorrectly received or lost SDUs to the transmitter RLC.

**The** AM mode supports at least one (and often a plurality) of mechanisms to enable retransmission of data. Some of these mechanisms are triggered at the transmitter of the data while others of these mechanisms are triggered at the receiver of the data.

Stated differently, the transmitter RLC protocol layer may retransmit SDUs that were either not received by the receiver RLC protocol layer, or which were not correctly received by the receiver RLC protocol layer. The RLC protocol layer may allow a maximum number of retransmissions to be made, after which the error is indicated to upper layer.

**The** retransmission may be made following the receiver RLC protocol layer providing a STATUS report to the transmitter RLC protocol layer (or any other signalling that indicates which SDUs have been incorrectly and/or correctly received by the receiver RLC protocol layer).

Transmission of the STATUS report may be performed in response to signalling from the transmitter that requests the STATUS report and/or autonomously by the receiver RLC layer (e.g., not in response to a request for the STATUS report from the transmitter).

A polling mechanism is an example of a how the transmitter may initiate transmission of the STATUS report. In this example, at the transmitter, a polling mechanism can be used to request a report from the receiver using a poll bit in a request signalled from the transmitter to the receiver. This polling method is premised on the assumption that the transmitted data is correctly decoded.

**The** use of configured timers is an example of how the receiver may autonomously signal a STATUS report. Two of the configured timers associated with this autonomous signalling in the AM mode are the t-Reassembly timer and the t-StatusProhibit timer (see details in 3GPP TS 38.322). The former timer (e.g., the t-Reassembly timer) defines a time window within which packets are expected to be received in-sequence, and so provides a window to detect missing packets. The latter timer (e.g., the t-StatusProhibit timer) defines a time window within which no new status report can be sent from the RLC entity at the receiving device to its peer entity at the transmitting device. A time window may be considered to be a duration of time. The time windows defined by the timers may be different durations.

The start time of these timers may be triggered in response to at least one event being detected. For example, when a missing transport block is detected (e.g., based on a missing sequence number of at least one PDU comprised in the missing transport block), the RLC entity at the receiver starts the t-Reassembly timer. In the downlink direction, the t-Reassembly timer at the UE RLC AM entity is configured via Radio Resource Control (RRC) signaling. In setting the t-Reassembly timer by means of RRC signaling, 3GPP TS 38.331 makes provision for 0 - 200 milliseconds (3GPP TS 38.322 specifies the behaviour when it expires, see clause 5.2).

This t-Reassembly timer is set such that it can accommodate any retransmission process happening at the lower layer (e.g., HARQ retransmissions). The t-Reassembly timer potentially does not expire before the HARQ processes are completed at the lower protocol level. This t-reassembly timer may therefore contribute to the delay attributed to the Radio Link Control Layer.

The t-Reassembly timer stops when either the RLC protocol layer determines that the missing packet has been received, or the t-Reassembly timer expires.

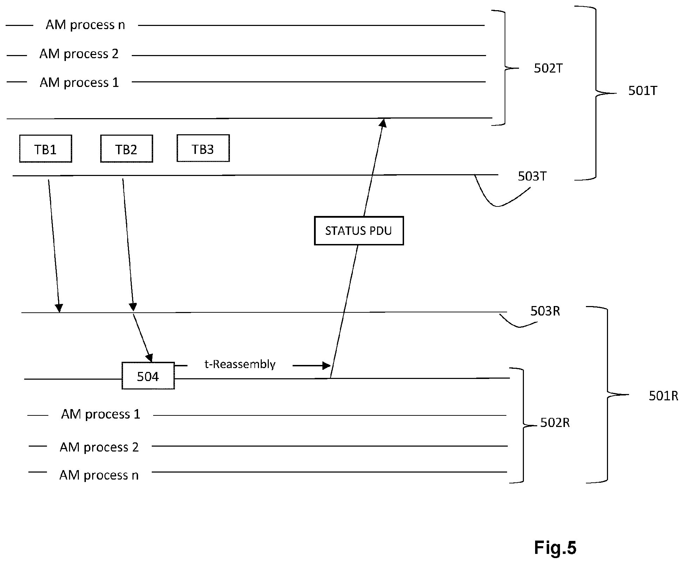

In its current implementation, and for downlink communications, when the UE RLC entity detects a missing packet, the UE RLC entity starts the t-Reassembly timer. As mentioned above, the RLC t-reassembly timer may be configured based on any of the values as defined in RLC config subsection of section 6.32 in the standard (TS 38.331), for terrestrial networks from 0-200ms. This value is however, set based on a worst-case scenario dominated by the maximum HARQ retransmission time and the assumed radio frame configuration and its parameters (such as the sub-carrier spacing, TDD configuration, etc.). FIG. 5 illustrates an example impact of such a configuration, including how such configurations results in "wasted" waiting times, especially when the RLC layer comprises multiple AM processes. AM processes will be described before their use in FIG. 5 is considered.

In the AM, whenever a radio bearer is setup, an RLC entity is also established. This RLC entity is also referred to herein as an RLC process. The establishment of an RLC process involves creating the RLC process and then initializing all the protocol state variables for that RLC process. Once the initialization is completed, the RLC AM process moves into the ACTIVE state.

In the ACTIVE state, the RRC layer can: re-establish the RLC AM process if the session has been reinitialized due to a radio link failure; and release the RLC AM process if the radio bearer is released at the RRC level. Re-establishment and release result in the discard of all RLC service data units (SDUs), RLC SDU segments, and RLC PDUs for that RLC AM process.

**The** transmitting side of an RLC AM process sends data PDUs associated with that process, while the receiving side of an RLC AM process acknowledges the transmission via control PDUs.

FIG. 5 illustrates a transmitter 501T comprising a transmitter RLC protocol layer 502T and a transmitter MAC protocol layer 503T. The transmitter RLC protocol layer 502T comprises a plurality of AM processes, labelled AM process 1, AM process 2, AM process N therein. Each of the plurality of AM processes contributes data from transmitting in a first transport block TB1 at the transmitter MAC protocol layer 503T. The transmitter MAC protocol layer 503T is unaware of any mapping between the data provided by the AM processes and the format of the first transport block TB1. The transmitter MAC protocol layer 503T is shown as providing transport blocks TB1 (transmitted at time, t), TB2 (transmitted at time t+1), and TB3 (transmitted at time t+2).

FIG. 5 further illustrates a receiver 501R comprising a receiver RLC protocol layer 502R and a receiver MAC protocol layer 503R. The receiver RLC protocol layer 502R comprises a plurality of AM processes that corresponds to the AM processes comprised in the transmitter RLC protocol layer 502T.

**As** shown in FIG. 5, the first transport block TB1 is not received by the receiver 501R within the maximum number of retransmission times allowed by the transmitter MAC protocol layer and the receiver MAC protocol layer. This failure to receive the first transport block TB1 is detected by the receiver RLC protocol layer 502R at 504 in response to detecting the second transport block (e.g., by detecting that the sequence number of at least one AM process comprised in the second transport block is out of sequence with respect to an expected sequence number to be received). After detecting the second transport block TB2 and determining that TB1 is missing, the receiver RLC protocol layer 502R starts a t-reassembly timer. TB1 may comprise data from all or a subset of the AM processes. When that t-reassembly timer expires, requests are sent for retransmitting data in respect of any AM process for which its associated expected sequence number has not been received. The time between the t-reassembly timer expiry and the maximum retransmission attempts being made may be considered as "wasted" time.

Stated differently, in the example of FIG. 5, it is assumed that N simultaneous RLC AM modes are active and each RLC AM mode of these N simultaneous RLC AM modes is associated with a respective expected packet sequence number to be received. After reception of TB1 fails (e.g., due to reaching the maximum number of retransmissions at the MAC/Physical layer), it is probable that RLC ARQ is to be performed for the data recovery. However, based on current 3GPP specifications, the AM processes wait until the successful reception of the second transport block, TB2 to determine that TB1 has, in fact, been lost. Then, at the receiver, the AM process(es) missing their expected associated SN start a pre-configured t-reassembly timer and, after expiry of the t-reassembly timer, will send a status report to let the transmitter know of the missing RLC PDU. As shown in FIG. 5, this wait time between the discovery of the transport block failure to the status report transmission comprises wasted time.

The following aims to provide mechanisms for reducing the latency associated with the RLC layer performing its retransmission procedure in respect of at least one missing PDU.

In more detail, the following introduces an "alert" state or mode for at least one AM process in the RLC protocol layer. The RLC protocol layer may cause the at least one AM process to enter this alert state in response to a receiver determining that there has been a transport block reception failure comprising data associated with the at least one AM process. This transport block reception failure may be determined in any of a plurality of different ways. For example, the RLC protocol layer may identify that no scheduling grant has been received in respect of a failed transport block reception. As another example, the transport block failure may be identified by the RLC protocol layer being explicitly informed of the transport block failure by the MAC/PHY layer of the receiver.

After the receiver RLC protocol layer initiates the alert state for the at least one AM process, the at least one AM process monitors for a trigger event.

The trigger event may be the expiry of a new timer that was started when the transport block failure was determined by the RLC protocol layer, and/or the determination that, for an AM process, a sequence number has been received that is out of sequence to an expected sequence number for that AM process. The new timer may be AM-process specific, or may be the same for all AM processes being maintained by the RLC protocol layer.

Stated differently, during the alert state, each of the AM processes associated with the missing transport block may perform at least one of:
1) Start a new timer and, if the missing RLC service data unit (SDU) comprised in the missing transport block does not arrive at the receiver RLC protocol layer prior to expiry of the new timer, send an early status report to the RLC protocol layer of the transmitter;
2) Track a next incoming RLC SDU sequence number and, if a different sequence is received instead of an expected sequence number for that AM process, send an early status report to the RLC protocol layer of the transmitter; and/or
3) A combination of 1) and 2), where any of a different sequence number being received and/or the new timer expiring causes the early status report to be sent.

When a trigger event is determined to have occurred, the receiver RLC protocol layer sends an indication to the transmitter RLC protocol layer that informs the transmitter that data is missing in respect of the at least one active AM process. This indication is also referred to herein as an early status report, as it may comprise the information of the status report transmitted when the t-reassembly timer expires, but is transmitted earlier. In response to this signalling, the transmitter RLC protocol layer may cause retransmission of the missing data using an RLC protocol layer retransmission mechanism.

Once the data comprised in the missing transport block is recovered and/or the early status report has been sent, the RLC protocol layer exits the alert state, and may continue to monitor for missing data.

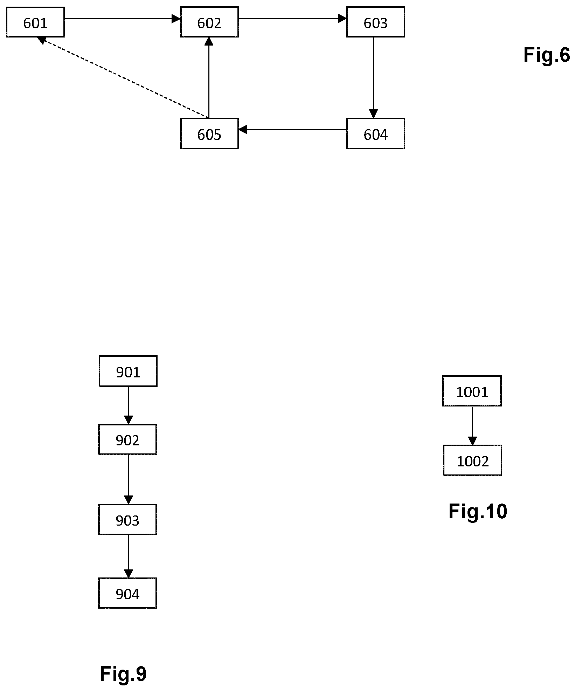

FIG. 6 outlines an overview of the processes that may be performed by apparatus described herein.

During 601, the transmitter (e.g., an access network node/gNB) configures the receiver RLC protocol layer to enable an AM alert state in respect of at least one AM process maintained at the receiver RLC protocol layer. An AM process may be considered to have an enabled AM alert state when, in response to the RLC protocol layer determining that data associated with that AM process has not been received at the MAC/PHY level, that AM process enters the alert state. In addition to enabling at least one AM alert state, the transmitter may configure the receiver RLC protocol layer to disable an AM alert state in respect of one other AM process maintained at the receiver RLC protocol layer.

The configuration of the receiver RLC protocol layer by the transmitter may be performed using signalling associated with a session establishment procedure and/or during a session reestablishment procedure, and/or during a session update procedure. Being able to perform the configuration at multiple times is useful as it may allow the network apparatus to respond to different network loads.

For example, where the signalling for causing the configuration relates to an already established session, this signalling may be performed in response to a dynamic determination of a current load in the network and/or current network conditions. For example, when a lot of transmissions/retransmissions are not being received by the receiver/UE and/or when the transmitter/network node is using more than a threshold amount of resources for signalling to a plurality of UEs, the network node may configure the UE with alert states in respect of only a subset (e.g., less than all) of the AM processes maintained at the RLC protocol layer. This subset may be determined in dependence on relative priority of the different AM processes, e.g., so that higher priority AM processes are more likely to be configured to use the alert state mechanism described herein than lower priority AM processes. Higher priority AM processes may comprise, for example, voice data and/or time critical data. Lower priority AM processes may comprise, for example, text data and/or non-time critical data.

The signalling for causing the configuration may be performed in dependence on a capability of the receiver/UE. Where the UE has multiple AM processes maintained at the RLC protocol layer, the configuration signalling may indicate that all or less than all of these multiple AM processes are to be enabled and/or disabled. To this effect, the configuration signalling may be able to distinguish between individual AM processes, and/or between associated groups (or sets) of more than one AM process.

The configuration may indicate at least one trigger event to be monitored for during the alert state.

**As** a first example, the configuration may indicate that, on an AM process entering the alert state, the AM process initiates (e.g., starts) a timer (referred to herein as an alert timer). The duration of the alert timer may be set by the configuration signalling. The duration of the alert timer may be set by some other signalling and/or preconfigured at the UE. The duration of the alert timer may be less than the duration of the t-reassembly timer. It is understood that as some AM processes maintained at the receiver RLC protocol layer may enabled for the alert state while other AM processes maintained at the receiver RLC protocol layer are not enabled for the alert state, the receiver RLC may simultaneously be configured with (and, when applicable, initialise timers corresponding to durations of) values for the alert timer and the t-reassembly timer. Further, the duration of the alert timer may be same for each AM process enabled for alert state, be the same for only a fraction (e.g., less than all) of the AM processes enabled for alert state, and/or be different for the AM processes enabled for alert state. In this first example, the trigger event comprises expiry of the alert timer without the missing data being detected by the RLC protocol layer. In this last example, the trigger event(s) to be monitored by a specific AM process may be configured independently of the trigger event(s) to be monitored by at least one other AM process.

**As** a second example of a trigger event, the configuration may indicate that, on an AM process entering the alert state, the RLC protocol layer should monitor for a specific sequence number for that AM process (also referred to herein as an "expected" sequence number). In this second example, the trigger event comprises receiving a sequence number for that AM process that is different to the expected sequence number.

It is understood that multiple of these trigger events may be monitored for by an AM process during the alert state.

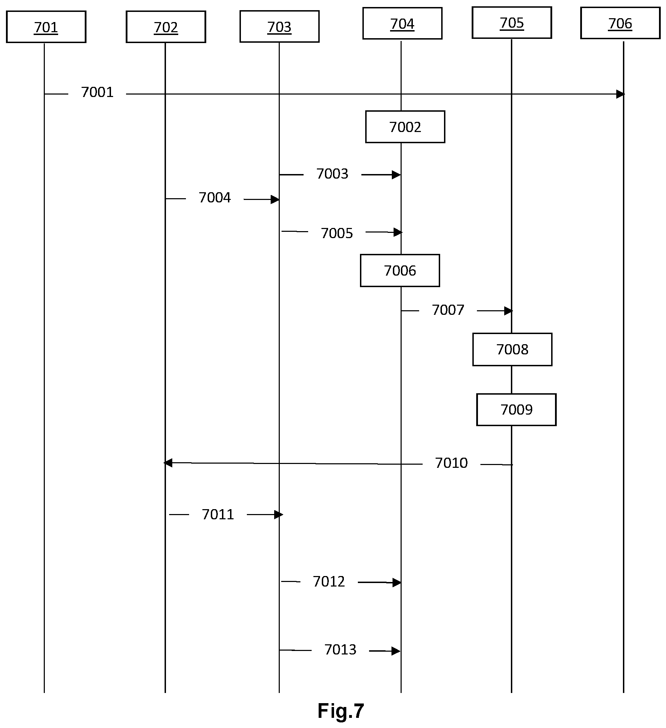

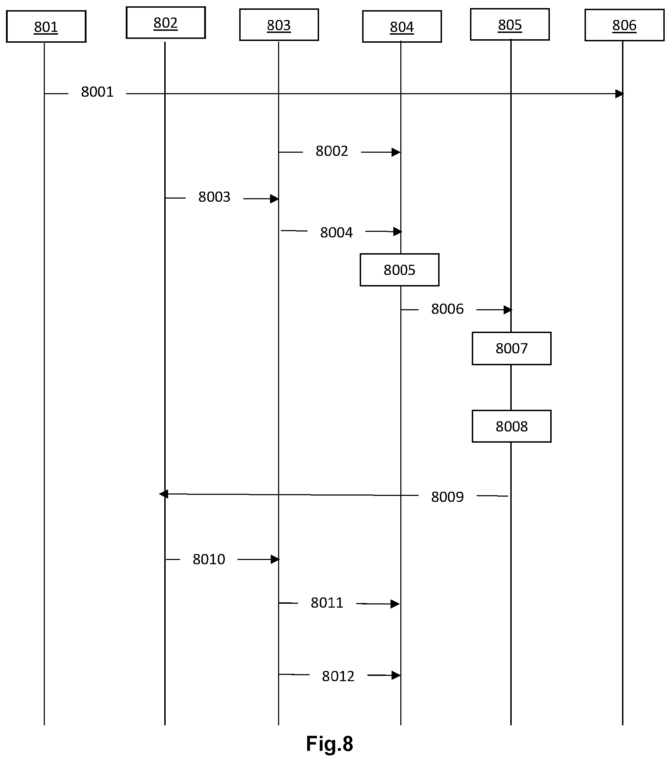

During 602, subsequent to data transmissions being made to the UE, the UE determines that retransmission procedures in respect of data comprised in a missing transport block have been completed at the PHY/MAC protocol layer. This determination may be made in any of a plurality of different ways. For example, the RLC protocol layer may identify that no scheduling grant has been received in respect of a failed transport block reception. As another example, the transport block failure may be identified by the RLC protocol layer being explicitly informed of the transport block failure by the MAC/PHY layer of the receiver. This latter option is illustrated in below in relation to FIGS. 7 and 8 with reference to static and/or dynamic signalling. In general, for this latter option, UE MAC protocol layer may monitor the ongoing retransmission processes (e.g., HARQ and/or SAW processes) and upon reception of new data where the MAC protocol layer did not provide an acknowledgement to previously transmitted data. The new data could be indicated via new data indicator (NDI) bit in a scheduling downlink control indication (DCI).

During 603, the UE MAC protocol layer indicates to the RLC protocol layer that a transport block has not been successfully received at the PHY/MAC. Stated differently, the UE MAC protocol layer indicates to the RLC protocol layer that there is missing data associated with a transport block. The RLC protocol layer determines which AM processes are affected by this missing data (e.g., which AM processes maintained by the RLC protocol layer were expecting data to be received in a transport block that was not successfully received. Of those affected AM processes, the RLC protocol layer further identify which of those AM processes are configured to enter the alert state, and to cause those identified AM processes to enter the alert state. The remaining AM processes that were affected but which are not configured to enter the alert state are treated as described above in relation to FIG. 5.

During 604, each AM process in an alert state monitors for at least one trigger event.

**As** mentioned above, as a first example, the trigger event may comprise expiry of the alert timer without the missing data being detected by the RLC protocol layer. As a second example of a trigger event, the trigger event may comprise receiving a sequence number for that AM process that is different to the sequence number expected to be next received for that AM process. It is understood that one, or multiple of these trigger events may be monitored for by an AM process during the alert state, depending on how that AM process is configured for its alert state.

With respect to the first example, if the expected RLC SDU sequence number arrives, within the alert timer running time, the AM process exits the alert state to 601 and/or 602.

During 605, when at least one monitored trigger event is detected, the AM process causes an indication to be sent to the RLC protocol layer at the transmitter. This indication informs the transmitter RLC protocol layer that the missing data has not been received. This indication may inform the transmitter RLC in respect of only the missing data at the triggered AM process, or in respect of all of the AM processes for which data is missing. Subsequent to this indication being signalled, the triggered AM process exits the alert state to 601 or 602. The indication may comprise the information currently signalled during STATUS signalling at expiry of the t-reassembly timer. However, this indication may be signalled much sooner than the STATUS signalling. Further, transmission of the indication may cause any currently running t-reassembly timer to be reset when information relating to those AM processes is signalled with the indication.

It is understood that when a StatusProhibit timer is running in any of the RLC processes, the UE can have two different behaviors whenever the method described above triggers a status report for transmission. The StatusProhibit timer is a timer that, while running, causes the transmission of STATUS reports to be delayed until expiry of the StatusProhibit timer.

In a first behaviour, the UE will wait until the expiry of the StatusProhibit timer before sending the generated status report (if still valid). This first behaviour is consistent with current operations of the StatusProhibit timer.

In a second behaviour, the UE overrides any running StatusProhibit timer and sends the status report without waiting for expiry of the StatusProhibit timer. This behavior may be configured via the access network node (e.g., when configuring the AM alert state via an RRC message).

**As** mentioned above, a receiver may be configured to determine when transmission attempts have been exhausted on a given retransmission process (e.g., a H-ARQ process) using information provided to the receiver (e.g., a UE, and/or an access network node) in explicit signaling from the transmitter (e.g., an access network node, such as a gNB, and/or a UE).

**To** enable this, a PHY and/or MAC protocol layer of the receiver may be configured to communicate expiry information to the receiver's RLC protocol layer for indicating that a retransmission mechanism deployed for a data packet at the PHY and/or MAC protocol layer has been completed. In response to this expiry information, the RLC protocol layer of the receiver may be configured to signal the RLC protocol layer of the transmitter to request retransmission at the RLC protocol layer. The receiver RLC protocol layer may further terminate any running RLC t-reassembly timer before the RLC t-Reassembly timer is scheduled to expire.

**To** illustrate how this may be achieved, FIGs. 7 and 8 respectively illustrate "semi-static" and "dynamic" mechanisms for informing the RLC protocol layer of when a retransmission layer at the PHY/MAC protocol layer has actually terminated. Although these examples are framed in the context of a transmitting access network node and a receiving UE, it is understood that the presently described principles are not limited to these apparatus.

In the semi-static case, the transmitter PHY/MAC protocol layer informs the receiver PHY/MAC protocol layer in advance of how many times the transmitter PHY/MAC protocol layer will transmit a missing packet (e.g., a packet that has not been received correctly at the receiver PHY/MAC protocol layer). The receiver PHY/MAC protocol layer subsequently counts a number of transmissions of the missing packet and informs the receiver RLC protocol layer when the number of transmissions of the missing packet equals the number of times the transmitter PHY/MAC protocol layer will transmit the missing packet.

In contrast, the dynamic case relates to the transmitter PHY/MAC protocol layer explicitly signaling the receiver PHY-MAC protocol layer when a retransmission of a missing packet is the last retransmission of that missing packet. When the receiver PHY/MAC protocol layer receives this "last" transmission and it is determined that the data comprised therein cannot be recovered based on all transmissions of this missing packet, the receiver PHY/MAC may identify that no more retransmissions of the missing packet will be performed by the PHY/MAC protocol layer and inform the receiver RLC protocol layer accordingly.

In both cases, following the receiver RLC protocol layer being informed that no further PHY/MAC protocol layer retransmissions will be performed in respect of the missing packet, the receiver RLC protocol layer may cause the transmitter RLC protocol layer to cause retransmission of the missing packet in accordance with RLC-layer data recovery mechanism. This may be effected, for example, by the receiver RLC protocol layer causing a STATUS PDU message to be transmitted to the transmitter RLC protocol layer.

FIG. 7 illustrates signaling that may be performed in the semi-static case.

FIG. 7 illustrates a process for retransmission that may be applied in respect of each of k HARQ processes. The receiver (e.g., a UE) may store a maximum number of retransmissions per HARQ process *C*0*ₖ =* {*C*0₁, *...C*0*_{K}*} received from a transmitter (e.g., a network node). *C*0*ₖ* may be a vector with size equal to the number of HARQ processes. Stated differently, each HARQ process may be associated with a respective maximum number of retransmissions.

**The** UE may initialize a respective retransmission counter (*C*1*ₖ*) in its MAC protocol layer when the UE generates the first NACK feedback for any of said HARQ processes. *C1ₖ* may be a vector with size equal to the number of HARQ processes. Stated differently, the receiver may comprise a respective counter for each HARQ process. Each of the elements of *C1ₖ* may comprise an updated number of retransmissions that the UE counts per HARQ process.

When an initialized retransmission counter equals the stored maximum number of retransmissions, the UE MAC protocol layer may inform the UE's RLC protocol layer through an internal message (UE implementation) to terminate the RLC acknowledged mode t-Reassembly timer and generate a STATUS PDU.

How the UE messages its RLC protocol layer may be implementation specific. For example, when the RLC protocol layer labels packet data units (PDUs) and/or service data units (SDUs) using explicit sequence numbering, the RLC protocol layer may determine when to start t-Reassembly timer for generating a STATUS PDU for a specific PDU/SDU by identifying that non-consecutive sequence numbers have been received in consecutive PDUs and/or SDUs received at the RLC protocol layer. The t-Reassembly timer may be initialized in response to this identification, and may be considered as being tightly coupled to specific missing PDUs.

FIG. 7 illustrates signaling that may be performed between a transmitter comprising a transmitter RRC layer 701, a transmitter RLC protocol layer 702, and a transmitter MAC protocol layer 703, and a receiver comprising a receiver MAC protocol layer 704, a receiver RLC protocol layer 705, and a receiver RRC layer 706.

During 7001, the transmitter RRC 701 signals the receiver RRC 706. This signaling may comprise an indication of a maximum number of HARQ retransmissions that are to be performed at the MAC level. This indication may be labelled as *"MaxrofHARQReTxPerHARQ-PRocessforPDSCH".* This indication may comprise a value *C0* that indicates the maximum number of HARQ retransmissions per HARQ process. This indication may be comprised in an RRC radio link control establishment setup signaling operation.

During 7002, the receiver MAC 704 stores the value *C0*. The receiver MAC 704 may store the value *C0* after being configured to store this value by the receiver radio resource control layer.

During 7003, the transmitter MAC 703 signals the receiver MAC 704. This signaling may comprise downlink control information (DCI). This signaling may indicate a modulation and coding scheme (MCS) for signaling data between the transmitter and the receiver. This signaling may comprise an indication that there is no new data being transmitted (e.g., the new data indicator (NDI) may equal zero).

During 7004, the transmitter RLC 702 signals the transmitter MAC 703. This signaling may comprise sequence numbering that labels protocol data units (PDUs) to be transmitted by the transmitter MAC 703 to the receiver MAC 704.

During 7005, the transmitter MAC 703 signals the receiver MAC 704. This signaling may comprise data in the form of PDUs. This signaling may be transmitted using a physical downlink shared channel. This signaling may label, at an RRC-level, the transmitted data using the sequence numbers indicated during 7004. This sequence numbering may be transparent at the MAC level. Stated differently, the receiver MAC 704 may not see the sequence numbers.

During 7006, the receiver MAC 704 determines (e.g., using cyclic redundancy check mechanisms) that at least one PDU has not been received correctly. For example, the receiver MAC 704 may determine that at least one received signalling has not been decoded correctly at the MAC/PHY level. Stated differently, the receiver MAC 704 determines to signal a NACK to the transmitter in respect of at the least one PDU. During this time, a counter *C1* is started, which tracks a number of retransmissions made of the at least one PDU.

From 7006, the transmitter MAC may continue to retransmit the at least one PDU until the number of retransmissions made reaches the maximum value stored during 7002. At this point, the at least one PDU may be considered as being missing (e.g., not successfully received), and the apparatus proceeds to 7007.

During 7007, the receiver MAC 704 signals the receiver RLC 705. This signaling may comprise MAC PDUs received at the receiver MAC 704 from the transmitter MAC 703, and may comprise an indication that the at least one PDU has not been successfully received.

During 7008, the receiver RLC 705 begins processing the received MAC PDUs. The receiver RLC 705 may start a timer (e.g., the t-Reassembly timer mentioned above) in respect of any AM processes that are affected by the missing at least one PDU that are not enabled for alert state. The receiver RLC 705 may cause AM processes that are affected by the at least one PDU and that are enabled for alert state to enter alert state and to monitor for at least one trigger event. The at least one trigger event may be as described above.

During 7009, the receiver RLC 705 detects that at least one trigger event has occurred for an AM process (e.g., an alert timer has expired and/or an out-of-sequence sequence number has been received), and causes a STATUS PDU to be generated early.

During 7010, the receiver RLC 705 signals the transmitter RLC 702. This signaling may comprise the early STATUS PDU generated during 7009. This signaling may be transmitted over the physical uplink shared channel (PUSCH) and/or physical uplink control channel (PUCCH).

During 7011, the transmitter RLC 702 signals the transmitter MAC 703. This signaling may comprise an instruction to retransmit the PDU received incorrectly.

During 7012, the transmitter MAC 703 signals the receiver MAC 704. This signaling may comprise downlink control information. The downlink control information may comprise an indication of a modulation and coding scheme. The signaling may comprise an indication that NDI=1.

During 7013, the transmitter MAC 703 signals the receiver MAC 704. This signaling may comprise an indication that TB N+1. Stated differently, the TB index used to label the PDU to be retransmitted is updated relative to previous transmissions. A different TB index may be used to indicate different transmission characteristics for transmission and/or reception of a transmission block (e.g., different MCS). This signaling may be transmitted on the physical downlink shared channel.

**The** transmitter/network node of FIG. 7 may thus communicate the maximum number of retransmissions to the receiver/UE for each HARQ process in advance of the last retransmission. This advance information may enable the receiver/UE to monitor or otherwise determine when a last (e.g., final) retransmission attempt has been performed at the MAC protocol layer.

**The** signaling between the network node and UE to configure the maximum number of retransmissions at the UE MAC protocol layer may be performed using RRC signaling. The new configuration may be fully controlled by the network. The new configuration may allow the UE to monitor the H-ARQ status and terminate the RLC timer early. When not configured, the UE can follow the legacy RLC configuration method (e.g., no early termination of the RLC-layer retransmission timer).

**The** UE may cause the UE RLC protocol layer to be informed about expiry events (e.g., about when a HARQ process has been terminated in respect of a specific PDU and/or SDU).

FIG. 8 illustrates signaling in relation to the dynamic scenario.

**FIG.** 8 illustrates signaling that may be performed between a transmitter comprising a transmitter RRC 801, a transmitter RLC 802, and a transmitter MAC 803, and a receiver comprising a receiver MAC 804, a receiver RLC 805, and a receiver RRC 806.

During 8001, the transmitter RRC 801 signals the receiver RRC 806. This signaling may be comprised in an RRC radio link control establishment setup signaling operation.

During 8002, the transmitter MAC 803 signals the receiver MAC 804. This signaling may comprise an indication of a last data indicator (LDI). In the present example, LDI equals 0. This signaling may comprise downlink control information (DCI). This signaling may indicate a modulation and coding scheme for signaling data between the transmitter and the receiver. This signaling may comprise an indication that NDI=0.

During 8003, the transmitter RLC 802 signals the transmitter MAC 803. This signaling may comprise an indication of sequence numbers to be applied to protocol data units (PDUs) to be transmitted by the transmitter MAC 803 to the receiver MAC 804.

During 8004, the transmitter MAC 803 signals the receiver MAC 804. This signaling may comprise data in the form of PDUs. This signaling may be transmitted using a physical downlink shared channel. This signaling may label the transmitted data using the sequence numbers indicated during 8003.

During 8005, the receiver MAC 804 determines (e.g., using the sequence number labelling and/or cyclic redundancy checking) that at least one PDU has not been received correctly. Stated differently, the receiver MAC 804 determines to signal a NACK to the transmitter in respect of at least one PDU.

From 8005, the transmitter MAC 803 may continue to retransmit the at least one PDU that has been NACKed by the receiver MAC 803 until a maximum number of transmission attempts have been made and/or until a timeout event occurs on expiry of a timer. At least one of these events may indicate that the retransmission attempts at the MAC layer have been completed in respect of the at least one PDU. In this example, the transmitter MAC 803 makes the determination of when this has been completed, and provides an indication of that completed retransmission process in signaling to the receiver MAC 804. When the receiver MAC 804 receives that indication that the at least one PDU will not be retransmitted at the MAC protocol layer, the receiver MAC 804 proceeds to 8006.

During 8006, the receiver MAC 804 signals the receiver RLC 805. This signaling may comprise MAC PDUs received at the receiver MAC 804 from the transmitter MAC 803. This signalling may comprise an indication that at least one transport block comprising the at least one PDU has not been received successfully.

During 8007, the receiver RLC 805 begins processing the received MAC PDUs. The receiver RLC 805 may start a timer (e.g., the t-Reassembly timer mentioned above) in respect of any AM processes that are affected that are not enabled for alert state. The receiver RLC 805 may cause AM processes that are affected and that are enabled for alert state to enter alert state and to monitor for at least one trigger event. The at least one trigger event may be as described above.

During 8008, the receiver RLC 805 detects that at least one trigger event has occurred for an AM process (e.g., an alert timer has expired and/or an out-of-sequence sequence number has been received), and causes a STATUS PDU to be generated early.

During 8009, the receiver RLC 805 signals the transmitter RLC 802. This signaling may comprise the STATUS PDU generated during 8008. This signaling may be transmitted over the physical uplink shared channel and/or physical uplink control channel.

During 8010, the transmitter RLC 802 signals the transmitter MAC 803. This signaling may comprise an instruction to retransmit the PDU received incorrectly.

During 8011, the transmitter MAC 803 signals the receiver MAC 804. This signaling may comprise downlink control information. The downlink control information may comprise an indication of a modulation and coding scheme. The signaling may comprise an indication that NDI=1.

During 8012, the transmitter MAC 803 signals the receiver MAC 804. This signaling may comprise an indication that TB N+1. This signaling may be transmitted on the physical downlink shared channel.

**As** per the signaling method of FIG. 8, a network node may signal an explicit indication of when the last transmission has been attempted. This explicit indication indicates that no further H-ARQ retransmissions will take place. The network node may directly send a request to the UE to expire/terminate its t-reassembly timer. This may be signaled using, for example, DCI and/or a MAC control element.

One way of signaling this information is by means of physical downlink control channel (PDCCH) control signaling. For example, similar to a "NEW DATA" indicator field that is currently used, a new indicator field for "LAST DATA" or "LAST Tx ATTEMPT" can be added as part of resource allocation signaling. Activation of the signaling mode to cause the UE to monitor for signals related to dynamic signaling of a last transmission indicator may also be toggled on and/or off by means of explicit RLC signaling if it is desired to save DCI bits.

**As** mentioned above, the presently disclosed last data indicator may be similar to the new data indicator (NDI) field in the DCI (see, for example, 3GPP TS 38.214). The last data indicator may comprise a single bit field. When the UE MAC's attempt at decoding this last retransmission fails, the UE MAC informs the UE's RLC entity to terminate the t-Reassembly timer and send a STATUS PDU.

In one example, the LDI field can be combined with the NDI field to give a single two bit field with combinations such as:
00 - New transmission.
01 - Retransmission
10 - Reserved
11 - Last data

In another example, the LDI may be maintained as a separate single bit field from the NDI with values:
0 - Not last retransmission
1 - Last retransmission

Like in the semi static case, the LDI indicator may be HARQ process specific, such that a received LDI indicator relates to a specific HARQ process (e.g., less than all HARQ processes currently deployed between the transmitter and the receiver).

**The** UE MAC may use internal messaging to inform the RLC protocol layer to terminate the t-Reassembly timer.

Which of the semi-static and dynamic cases is more useful in a specific case may vary with the specifics of that case.

For example, the semi-static option offers a signaling efficient approach by limiting a transmitter to work with dynamic number of maximum retransmissions based on, for example, any of a plurality of different factors, including current load considerations, hardware limitations (e.g., memory, processor limitations), energy consumption limitations, etc. However, this semi-static option may use more monitoring and thus increased complexity to estimate the early timer event at the receiver.

In contrast, the dynamic option uses more signaling between the transmitter and the receiver than the semi-static option, but offers more flexibility in terms of scheduler and link adaptation at the transmitter and requires less monitoring of the H-ARQ processes at the receiver than the semi-static option.

Although the presently described mechanisms are especially useful for cases when a receiver is configured with only a single RLC acknowledged mode entity (e.g., so that there is no ambiguity between what was sent on the physical layer and how it maps to the logical channels the RLC protocol layer controls), the mechanisms may be applied to other scenarios.

For example, the present mechanisms may be applied when the missing packet on the air interface applies to a signaling radio bearer (e.g., RRC message or otherwise) that is not part of the RLC acknowledged mode entity.

**In** this example, the RLC acknowledged mode may react to any expired transmission and it is expected that signaling radio bearer will not be expired. In the dynamic method, that is covered directly as the transmitter decides which transmissions it communicates expiration notice for. In the semi-static method, signaling radio bearers (SRBs) may be sent only on certain H-ARQ stop-and-wait (SAW) processes, or it may be assumed that there is no maximum number of transmission attempts.

Therefore, the presently described techniques are not limited to RLC acknowledged mode.

**As** another example, the present mechanisms may be applied when a receiver has parallel RLC acknowledged mode entities configured for the radio bearers in the interface between the receiver and the transmitter (e.g., the Uu interface when the transmitter-receiver pair is an access network node-UE pair).

In this example, the RLC acknowledged mode may only react to missing PDUs when there is a low probability of packets being missing across all current H-ARQ communications. The RLC protocol layer in the receiver handling the parallel RLC acknowledged mode entities may optimize which entity the retransmission should be done for based on parallel monitoring of all the flows. The receiver may comprise an internal expiry time that allows for pending service data units (SDUs) to reach the receiver before a decision for retransmission is made at the RLC protocol layer. Alternatively, the transmitter MAC protocol layer could explicitly indicate to the receiver which RLC acknowledged mode entity a certain expiration applies for.

Features of the above examples are illustrated below with reference to FIGS. 9 and 10, which respectively outline operations that may be performed by a receiver and a transmitter. It is therefore understood that at least one of the following features may find functional correspondence in at least one example mentioned above, and that the above examples may provide illustrations of how the following may be implemented.

FIG. 9 illustrates operations that are performed by an apparatus. The apparatus may comprise a receiver that receives data (e.g., service data units comprised in at least one transport block). The apparatus may correspond to the apparatus of FIG. 2 (e.g., when the apparatus is a receiver in a network node). The apparatus may correspond to the apparatus of FIG. 3 (e.g., when the apparatus is a receiver in a UE).

During 901, the apparatus maintains, at a radio link control, RLC, protocol layer of the apparatus, at least a first RLC entity and a second RLC entity, each of the first and second RLC entities being associated with a respective set of service data units to be acknowledged. For example, the first RLC entity may be associated with a first order of sequence numbers of service data units to be acknowledged, while the second RLC entity may be associated with a second order of sequence numbers of service data units to be acknowledged. The sequence numbers in each of the first and second orders may be different during at least a first time period. An RLC entity may correspond to an RLC process.

During 902, the apparatus determines, by the RLC protocol layer from an indication received from a medium access control, MAC, and/or physical, PHY, protocol layer of the apparatus, that a retransmission procedure of a data packet comprising at least one service data unit of the set of service data units has been completed without the at least one service data unit being successfully received. The set of service data units may correspond to the set of service data units associated with the first RLC entity and/or the set of service data units associated with the second RLC entity. The data packet may comprise a transport block. The transport block may comprise service data units associated with the first RLC entity and/or the second RLC entity.

During 903, the apparatus causes at least one of the first RLC entity or the second RLC entity to determine whether at least one trigger event occurs based on the determining.

For example, when it is determined during 902 that a service data unit associated with the first RLC entity has not been successfully received, the apparatus may cause the first RLC entity to determine whether the at least one trigger event occurs. Similarly, when it is determined during 902 that a service data unit associated with the second RLC entity has not been successfully received, the apparatus may cause the second RLC entity to determine whether the at least one trigger event occurs. When it is determined during 902 that service data units associated with both the first and second RLC entities have not been received successfully, the first and second RLC entities may both be caused to determine whether the at least one trigger event occurs. In this latter case, the trigger event may be the same for both of the first and second entities, and/or different for the first and second entities (e.g., both initialise a timer for the same duration and/or each initialises a timer for respective, different durations).

The first and/or second RLC entity may be caused to determine whether the at least one trigger event occurs. The at least one trigger event may comprise, for example, a determination that a service data unit of one of said sets of service data units has been received that comprises a sequence number that is out of sequence relative to a sequence number expected to be received for that set of service data units. Alternately or additionally, the at least one trigger event may comprise a determination that a timer that was started in response to the receipt of the indication from the MAC and/or PHY protocol layer has expired.

During 904, when the first RLC entity and/or the second RLC entity determines that the at least one trigger event has occurred, the apparatus signals, to a transmitter of the data packet, an indication that the at least one service data unit has not been successfully received by the RLC protocol layer.

**The** determining that a retransmission procedure of a data packet comprising the at least one service data unit of the set of service data units has been completed without the at least one service data unit being successfully received may comprise receiving an indication from the MAC and/or PHY protocol level that indicates that a maximum number of retransmissions of the data packet has been made at the MAC and/or PHY level, and/or receiving a scheduling indication that indicates that no resources have been allocated for retransmission of the data packet.

For each of said respective sets, the service data units comprised within that respective set may be associated with a reception sequence order that indicates an order in which said service data units are expected to be received within their respective set. In such a case, the causing at least one of the first RLC entity or the second RLC entity to determine whether the at least one trigger event occurs may be performed before the RLC protocol layer receives a service data unit out of sequence to service data units already received by the RLC protocol layer.

Stated differently, the causing at least one of the first RLC entity or the second RLC entity to determine whether the at least one trigger event occurs may be performed before a t-reassembly timer would have been started (e.g., before the RLC protocol layer receives a service data unit comprising a sequence number that is out of sequence to a sequence number expected to be received by the RLC protocol layer).

The apparatus may determine whether a timer is running at the apparatus that prohibits transmission of the signalling to the transmitter the indication that the at least one service data unit has not been successfully received by the RLC protocol layer (e.g., a t-prohibit timer is running). When such a timer is running, the apparatus may delay transmission of said signalling to the transmitter until expiry of said timer.

The apparatus may signal said indication that the at least one service data unit has not been successfully received by the RLC protocol layer regardless of whether a timer is running at the apparatus that prohibits transmission of the signalling to the transmitter the indication that the at least one service data unit has not been successfully received by the RLC protocol layer.

The apparatus receives, from a transmitter of the data packet, a configuration for causing the at least one first and/or second RLC entity to determine whether the at least one trigger event occurs, and apply the received configuration.

The configuration may comprise an indication to initiate a timer and/or an indication that a sequence number order is to be monitored for detecting whether a service data unit is received out of order.

The configuration comprises a different configuration for each of the first and/or second RLC entity for determining whether the at least one trigger event occurs. For example, the configuration may comprise at least one different parameter to be monitored (e.g., different timer values for the first and second RLC entities respectively, different types of events to be monitored, such as timer and/or an out of sequence number).

The configuration may comprise a same configuration for the first and second RLC entity for determining whether the at least one trigger event occurs.

FIG. 10 illustrates operations that are performed by an apparatus. The apparatus may comprise a transmitter. The apparatus may comprise a transmitter of the data packet(s) received by the apparatus of FIG. 9. The apparatus may correspond to the apparatus of FIG. 2 (e.g., when the apparatus is a transmitter in a network node). The apparatus may correspond to the apparatus of FIG. 3 (e.g., when the apparatus is a transmitter in a UE).

During 1001, the apparatus determines, for at least one of a first and second radio link control, RLC, entity maintained by an RLC protocol layer of the apparatus, a configuration for corresponding first and second radio RLC entities maintained by an RLC protocol layer of a receiver. The receiver may correspond to the receiver of FIG. 9. The configuration is for causing the at least one first and/or second RLC entity at the receiver to determine whether at least one trigger event occurs in response to the receiver determining that retransmission mechanism performed at a medium access control, MAC, protocol layer and/or physical, PHY, protocol layer has been completed.

During 1002, the apparatus provides the configuration to the receiver.

The configuration may comprise an indication to initiate a timer and/or an indication that a sequence number order is to be monitored for detecting whether a service data unit is received out of order.

The configuration comprises a different configuration for each of the first and/or second RLC entity for determining whether the at least one trigger event occurs. For example, the configuration may comprise at least one different parameter to be monitored (e.g., different timer values for the first and second RLC entities respectively, different types of events to be monitored, such as timer and/or an out of sequence number).

The configuration may comprise a same configuration for the first and second RLC entity for determining whether the at least one trigger event occurs.

The subject disclosure has provided by way of non-limiting and illustrative examples a full and informative description of some of the various examples described herein. However, various modifications and adaptations may become apparent to those skilled in the relevant arts in view of the foregoing description, when read in conjunction with the accompanying drawings and the claims. However, all such and similar modifications of the teachings will still fall within the scope of the various examples of the subject disclosure.

In the above, different examples are described using, as an example of an access architecture to which the described techniques may be applied, a radio access architecture based on long term evolution advanced (LTE Advanced, LTE-A) or new radio (NR, 5G, 6G, etc.), without restricting the examples to such an architecture, however. The examples may also be applied to other kinds of communications networks having suitable means by adjusting parameters and procedures where appropriate. Some examples of other options for suitable systems are the universal mobile telecommunications system (UMTS) radio access network (UTRAN), wireless local area network (WLAN or Wi-Fi), worldwide interoperability for microwave access (WiMAX), Bluetooth^{®}, personal communications services (PCS), ZigBee^{®}, wideband code division multiple access (WCDMA), systems using ultra-wideband (UWB) technology, sensor networks, mobile ad-hoc networks (MANETs) and Internet Protocol multimedia subsystems (IMS) or any combination thereof.

**As** provided herein, several aspects are described in the various examples of the subject disclosure as well as in the claims. In general, some examples may be implemented in hardware or special purpose circuits, software code, logic or any combination thereof. For example, some aspects may be implemented in hardware, while other aspects may be implemented in firmware or software code which may be executed by a controller, microprocessor or other computing device, although examples are not limited thereto. While various examples may be illustrated and described as block diagrams, flow charts, or using some other pictorial representation, it is understood that these blocks, apparatus, systems, techniques or methods described herein may be implemented in, as non-limiting and illustrative examples, hardware, software code, firmware code, special purpose circuits or logic, general purpose hardware or controller or other computing devices, or some combination thereof.

**The** examples may be implemented by computer software code stored in a memory and executable by at least one data processor of the involved entities or by hardware, or by a combination of software code and hardware.

The memory referred to herein may be of any type suitable to the local technical environment and may be implemented using any suitable data storage technology, such as semiconductor based memory devices, magnetic memory devices and systems, optical memory devices and systems, fixed memory and removable memory.

The (data) processors referred to herein may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting and illustrative examples.

Further in this regard it should be noted that any procedures, e.g., as in FIG. 9, and/or FIG.10, and/or otherwise described herein, represent operations of a program (i.e., computer program) being deployed by at least one processor comprised in an apparatus (where a program (e.g., computer program) comprises instructions for causing an apparatus to perform at least one action, the instructions being represented as software code stored on at least one memory), or interconnected logic circuits, blocks and functions, or a combination of operations of a computer program being deployed by at least one processor comprised in an apparatus and logic circuits, blocks and functions. The software code may be stored on memory, such as physical media as memory chips, or memory blocks implemented within the processor, magnetic media (such as, hard disk or floppy disks), and optical media (such as, for example, DVD and the data variants thereof, CD, and so forth).

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multicore processor architecture, as non-limiting and illustrative examples.

Additionally or alternatively, some examples may be implemented using circuitry. The circuitry may be configured to perform one or more of the functions and/or method steps previously described. That circuitry may be provided in the network node and/or the base station and/or in the communications device and/or in a core network entity.

As used herein, the term "circuitry" or "means" may refer to one or more or all of the following examples:
(a) hardware-only circuit implementations (such as, implementations in only analogue and/or digital circuitry);
(b) combinations of hardware circuits and software code, such as:
   (i) a combination of analogue and/or digital hardware circuit(s) with software/firmware code and
   (ii) any portions of hardware processor(s) with software code (including digital signal processor(s)), software code, and memory(ies) that work together to cause an apparatus, such as the communications device or base station to perform the various functions previously described; and
(c) hardware circuit(s) and or processor(s), such as a microprocessor(s) or a portion of a microprocessor(s), that utilizes software code (e.g., firmware) for operation, but the software code may not be present when not utilized for operation.

This definition of circuitry applies to all uses of this term herein, including in any claims. As a further example, as used herein, the term circuitry also covers an implementation of merely a hardware circuit or processor (or multiple processors) or portion of a hardware circuit or processor and its (or their) accompanying software and/or firmware code. The term circuitry also covers, for example, integrated device(s).

Implementations of the disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

**As** used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

**The** term "non-transitory," as used herein, is a limitation of the medium itself (e.g., tangible, not a signal) as opposed to a limitation on data storage persistency (e.g., RAM vs. ROM).

**The** scope of protection sought for the various examples of the subject disclosure is set out by the independent claims. The various examples and aspects/features thereof, described in this specification that do not, if any, fall under the scope of the independent claims are to be interpreted as examples useful for understanding this subject disclosure.

This subject disclosure has provided, by way of non-limiting and illustrative examples, a full and informative description of some example implementations. However, various modifications and adaptations may become apparent to those skilled in the relevant arts in view of the foregoing description, when read in conjunction with the accompanying drawings and the claims. However, all such and similar modifications of the teachings of this subject disclosure will still fall within the scope of this various examples described herein. Indeed, there is a further example implementation comprising a combination of one or more example implementations with any of the other example implementations described herein.

## Claims

1. An apparatus comprising means for performing:
maintaining (901), at a radio link control, RLC, protocol layer of the apparatus, at least a first RLC entity and a second RLC entity, each of the first and second RLC entities being associated with a respective set of service data units to be acknowledged;
determining (902), by the RLC protocol layer from an indication received from a medium access control, MAC, and/or physical, PHY, protocol layer of the apparatus, that a retransmission procedure of a data packet comprising at least one service data unit of the set of service data units has been completed without the at least one service data unit being successfully received;
causing (903) at least one of the first RLC entity or the second RLC entity to determine whether at least one trigger event occurs based on the determining; and
when the first RLC entity and/or the second RLC entity determines that the at least one trigger event has occurred, signalling (904) to a transmitter of the data packet an indication that the at least one service data unit has not been successfully received by the RLC protocol layer,
**characterised by** further comprising means for performing:
receiving, from a transmitter of the data packet, a configuration for causing the at least one first and/or second RLC entity to determine whether the at least one trigger event occurs, wherein the configuration comprises a different configuration for each of the first and second RLC entity for determining whether the at least one trigger event occurs; and
applying the received configuration.

2. The apparatus as claimed in claim 1, wherein the at least one trigger event comprises at least one of:
a determination that a service data unit of one of said sets of service data units has been received that comprises a sequence number that is out of sequence relative to a sequence number expected to be received for that set of service data units; or
a determination that a timer that was started in response to the receipt of the indication from the MAC and/or PHY protocol layer has expired.

3. The apparatus as claimed in any preceding claim, wherein the means for determining that a retransmission procedure of a data packet comprising the at least one service data unit of the set of service data units has been completed without the at least one service data unit being successfully received comprises means for:
receiving an indication from the MAC and/or PHY protocol level that indicates that a maximum number of retransmissions of the data packet has been made at the MAC and/or PHY level; and/or
receiving a scheduling indication that indicates that no resources have been allocated for retransmission of the data packet.

4. The apparatus as claimed in any preceding claim, wherein, for each of said respective sets, the service data units comprised within that respective set are associated with a reception sequence order that indicates an order in which said service data units are expected to be received within their respective set, and wherein the causing at least one of the first RLC entity or the second RLC entity to determine whether the at least one trigger event occurs is performed before the RLC protocol layer receives a service data unit out of sequence to service data units already received by the RLC protocol layer.

5. The apparatus as claimed in any preceding claim, further comprising means for performing:
determining whether a timer is running that prohibits transmission of the signalling to the transmitter the indication that the at least one service data unit has not been successfully received by the RLC protocol layer; and
delaying transmission of said signalling to the transmitter until expiry of said timer.

6. The apparatus as claimed in any of claims 1 to 4, further comprising means for performing:
transmitting said signalling of the indication that the at least one service data unit has not been successfully received by the RLC protocol layer regardless of whether a timer is running that prohibits transmission of the signalling to the transmitter the indication that the at least one service data unit has not been successfully received by the RLC protocol layer.

7. An apparatus comprising means for performing:
determining (1001), for at least one of a first and second radio link control, RLC, entity maintained by an RLC protocol layer of the apparatus, a configuration for corresponding first and second radio RLC entities maintained by an RLC protocol layer of a receiver and associated with a respective set of service data units to be acknowledged,
wherein the configuration is for causing the at least one first and/or second RLC entity at the receiver to determine whether at least one trigger event occurs in response to the receiver determining that retransmission mechanism performed at a medium access control, MAC, protocol layer and/or physical, PHY, protocol layer for**a** data packet comprising at least one service data unit of the set of service data units has been completed without the at least one service data unit being successfully received,
wherein the configuration comprises a different configuration for each of the first and second RLC entity for determining whether the at least one trigger event occurs; and
providing (1002) the configuration to the receiver.

8. The apparatus as claimed in any preceding claim, wherein the configuration comprises an indication to initiate a timer and/or an indication that a sequence number order is to be monitored for detecting whether a service data unit is received out of order.

9. A method performed by an apparatus, the method comprising:
maintaining (901), at a radio link control, RLC, protocol layer of the apparatus, at least a first RLC entity and a second RLC entity, each of the first and second RLC entities being associated with a respective set of service data units to be acknowledged;
determining (902), by the RLC protocol layer from an indication received from a medium access control, MAC, and/or physical, PHY, protocol layer of the apparatus, that a retransmission procedure of a data packet comprising at least one service data unit of the set of service data units has been completed without the at least one service data unit being successfully received;
causing (903) at least one of the first RLC entity or the second RLC entity to determine whether at least one trigger event occurs based on the determining; and
when the first RLC entity and/or the second RLC entity determines that the at least one trigger event has occurred, signalling (904) to a transmitter of the data packet an indication that the at least one service data unit has not been successfully received by the RLC protocol layer,
**characterised by**:
receiving, from a transmitter of the data packet, a configuration for causing the at least one first and/or second RLC entity to determine whether the at least one trigger event occurs, wherein the configuration comprises a different configuration for each of the first and
second RLC entity for determining whether the at least one trigger event occurs; and
applying the received configuration.

10. A method performed by an apparatus the method comprising:
determining (1001), for at least one of a first and second radio link control, RLC, entity maintained by an RLC protocol layer of the apparatus, a configuration for corresponding first and second radio RLC entities maintained by an RLC protocol layer of a receiver and associated with a respective set of service data units to be acknowledged,
wherein the configuration is for causing the at least one first and/or second RLC entity at the receiver to determine whether at least one trigger event occurs in response to the receiver determining that retransmission mechanism performed at a medium access control, MAC, protocol layer and/or physical, PHY, protocol layer for a data packet comprising at least one service data unit of the set of service data units has been completed without the at least one service data unit being successfully received,
wherein the configuration comprises a different configuration for each of the first and second RLC entity for determining whether the at least one trigger event occurs; and
providing (1002) the configuration to the receiver.

11. A computer program comprising instructions which, when the program is executed by a computer of an apparatus, cause the apparatus to carry out:
maintaining (901), at a radio link control, RLC, protocol layer of the apparatus, at least a first RLC entity and a second RLC entity, each of the first and second RLC entities being associated with a respective set of service data units to be acknowledged;
determining (902), by the RLC protocol layer from an indication received from a medium access control, MAC, and/or physical, PHY, protocol layer of the apparatus, that a retransmission procedure of a data packet comprising at least one service data unit of the set of service data units has been completed without the at least one service data unit being successfully received;
causing (903) at least one of the first RLC entity or the second RLC entity to determine whether at least one trigger event occurs based on the determining; and
when the first RLC entity and/or the second RLC entity determines that the at least one trigger event has occurred, signalling (904) to a transmitter of the data packet an indication that the at least one service data unit has not been successfully received by the RLC protocol layer,
**characterised by** the instructions further being configured to cause the apparatus to perform:
receiving, from a transmitter of the data packet, a configuration for causing the at least one first and/or second RLC entity to determine whether the at least one trigger event occurs, wherein the configuration comprises a different configuration for each of the first and second RLC entity for determining whether the at least one trigger event occurs; and
applying the received configuration.

12. A computer program comprising instructions which, when the program is executed by a computer of an apparatus, cause the apparatus to carry out:
determining (1001), for at least one of a first and second radio link control, RLC, entity maintained by an RLC protocol layer of the apparatus, a configuration for corresponding first and second radio RLC entities maintained by an RLC protocol layer of a receiver and associated with a respective set of service data units to be acknowledged,
wherein the configuration is for causing the at least one first and/or second RLC entity at the receiver to determine whether at least one trigger event occurs in response to the receiver determining that retransmission mechanism performed at a medium access control, MAC, protocol layer and/or physical, PHY, protocol layer for a data packet comprising at least one service data unit of the set of service data units has been completed without the at least one service data unit being successfully received,
wherein the configuration comprises a different configuration for each of the first and second RLC entity for determining whether the at least one trigger event occurs; and
providing (1002) the configuration to the receiver.

## Patentansprüche

1. Vorrichtung, umfassend Mittel zum Ausführen von:
Aufrechterhalten (901), auf einer Funkverbindungssteuerungs-, RLC-, Protokollschicht der Vorrichtung, von mindestens einer ersten RLC-Entität und einer zweiten RLC-Entität, wobei jede der ersten und zweiten RLC-Entitäten mit einem jeweiligen Satz von zu bestätigenden Dienstdateneinheiten assoziiert ist;
Bestimmen (902), durch die RLC-Protokollschicht aus einer Anzeige, die von einer Medienzugriffssteuerungs-, MAC-, und/oder physikalischen, PHY-, Protokollschicht der Vorrichtung empfangen wurde, dass ein Neuübertragungsverfahren eines Datenpakets, das mindestens eine Dienstdateneinheit des Satzes von Dienstdateneinheiten umfasst, abgeschlossen wurde, ohne dass die mindestens eine Dienstdateneinheit erfolgreich empfangen wurde;
Veranlassen (903) von mindestens einer der ersten RLC-Entität oder der zweiten RLC-Entität zu bestimmen, ob mindestens ein Auslöseereignis basierend auf der Bestimmung auftritt; und
wenn die erste RLC-Entität und/oder die zweite RLC-Entität bestimmt, dass das mindestens eine Auslöseereignis aufgetreten ist, Signalisieren (904) an einen Sender des Datenpakets einer Anzeige, dass die mindestens eine Dienstdateneinheit nicht erfolgreich durch die RLC-Protokollschicht empfangen wurde,
**dadurch gekennzeichnet, dass** sie ferner Mittel zum Ausführen von umfasst:
Empfangen, von einem Sender des Datenpakets, einer Konfiguration zum Veranlassen der mindestens einen ersten und/oder zweiten RLC-Entität zu bestimmen, ob das mindestens eine Auslöseereignis auftritt, wobei die Konfiguration eine unterschiedliche Konfiguration für jede der ersten und zweiten RLC-Entität zum Bestimmen, ob das mindestens eine Auslöseereignis auftritt, umfasst; und
Anwenden der empfangenen Konfiguration.

2. Vorrichtung nach Anspruch 1, wobei das mindestens eine Auslöseereignis mindestens eines umfasst von:
einer Bestimmung, dass eine Dienstdateneinheit eines der genannten Sätze von Dienstdateneinheiten empfangen wurde, die eine Sequenznummer umfasst, die außerhalb der Sequenz relativ zu einer Sequenznummer ist, die für diesen Satz von Dienstdateneinheiten erwartet wird; oder
einer Bestimmung, dass ein Zeitgeber, der als Reaktion auf den Empfang der Anzeige von der MAC- und/oder PHY-Protokollschicht gestartet wurde, abgelaufen ist.

3. Vorrichtung nach einem der vorhergehenden Ansprüche, wobei die Mittel zum Bestimmen, dass ein Neuübertragungsverfahren eines Datenpakets, das die mindestens eine Dienstdateneinheit des Satzes von Dienstdateneinheiten umfasst, abgeschlossen wurde, ohne dass die mindestens eine Dienstdateneinheit erfolgreich empfangen wurde, Mittel umfassen zum:
Empfangen einer Anzeige von der MAC- und/oder PHY-Protokollebene, die anzeigt, dass eine maximale Anzahl von Neuübertragungen des Datenpakets auf der MAC- und/oder PHY-Ebene durchgeführt wurde; und/oder
Empfangen einer Planungsanzeige, die anzeigt, dass keine Ressourcen für die Neuübertragung des Datenpakets zugewiesen wurden.

4. Vorrichtung nach einem der vorhergehenden Ansprüche, wobei für jeden der genannten jeweiligen Sätze die in diesem jeweiligen Satz enthaltenen Dienstdateneinheiten mit einer Empfangssequenzreihenfolge assoziiert sind, die eine Reihenfolge anzeigt, in der die genannten Dienstdateneinheiten innerhalb ihres jeweiligen Satzes erwartet werden, empfangen zu werden, und wobei das Veranlassen von mindestens einer der ersten RLC-Entität oder der zweiten RLC-Entität zu bestimmen, ob das mindestens eine Auslöseereignis auftritt, ausgeführt wird, bevor die RLC-Protokollschicht eine Dienstdateneinheit außerhalb der Sequenz zu Dienstdateneinheiten empfängt, die bereits durch die RLC-Protokollschicht empfangen wurden.

5. Vorrichtung nach einem der vorhergehenden Ansprüche, ferner umfassend Mittel zum Ausführen von:
Bestimmen, ob ein Zeitgeber läuft, der die Übertragung der Signalisierung an den Sender der Anzeige, dass die mindestens eine Dienstdateneinheit nicht erfolgreich durch die RLC-Protokollschicht empfangen wurde, verbietet; und
Verzögern der Übertragung der genannten Signalisierung an den Sender bis zum Ablauf des genannten Zeitgebers.

6. Vorrichtung nach einem der Ansprüche 1 bis 4, ferner umfassend Mittel zum Ausführen von:
Übertragen der genannten Signalisierung der Anzeige, dass die mindestens eine Dienstdateneinheit nicht erfolgreich durch die RLC-Protokollschicht empfangen wurde, unabhängig davon, ob ein Zeitgeber läuft, der die Übertragung der Signalisierung an den Sender der Anzeige, dass die mindestens eine Dienstdateneinheit nicht erfolgreich durch die RLC-Protokollschicht empfangen wurde, verbietet.

7. Vorrichtung, umfassend Mittel zum Ausführen von:
Bestimmen (1001), für mindestens eine einer ersten und zweiten Funkverbindungssteuerungs-, RLC-, Entität, die durch eine RLC-Protokollschicht der Vorrichtung aufrechterhalten wird, einer Konfiguration für entsprechende erste und zweite Funk-RLC-Entitäten, die durch eine RLC-Protokollschicht eines Empfängers aufrechterhalten werden und mit einem jeweiligen Satz von zu bestätigenden Dienstdateneinheiten assoziiert sind,
wobei die Konfiguration dafür ist, die mindestens eine erste und/oder zweite RLC-Entität beim Empfänger zu veranlassen zu bestimmen, ob mindestens ein Auslöseereignis auftritt, als Reaktion darauf, dass der Empfänger bestimmt, dass ein Neuübertragungsmechanismus, der auf einer Medienzugriffssteuerungs-, MAC-, Protokollschicht und/oder physikalischen, PHY-, Protokollschicht für ein Datenpaket, das mindestens eine Dienstdateneinheit des Satzes von Dienstdateneinheiten umfasst, durchgeführt wurde, abgeschlossen wurde, ohne dass die mindestens eine Dienstdateneinheit erfolgreich empfangen wurde, wobei die Konfiguration eine unterschiedliche Konfiguration für jede der ersten und zweiten RLC-Entität zum Bestimmen, ob das mindestens eine Auslöseereignis auftritt, umfasst; und
Bereitstellen (1002) der Konfiguration an den Empfänger.

8. Vorrichtung nach einem der vorhergehenden Ansprüche, wobei die Konfiguration eine Anzeige zum Initiieren eines Zeitgebers und/oder eine Anzeige umfasst, dass eine Sequenznummernreihenfolge zu überwachen ist, um zu detektieren, ob eine Dienstdateneinheit außerhalb der Reihenfolge empfangen wird.

9. Verfahren, das von einer Vorrichtung ausgeführt wird, wobei das Verfahren umfasst:
Aufrechterhalten (901), auf einer Funkverbindungssteuerungs-, RLC-, Protokollschicht der Vorrichtung, von mindestens einer ersten RLC-Entität und einer zweiten RLC-Entität, wobei jede der ersten und zweiten RLC-Entitäten mit einem jeweiligen Satz von zu bestätigenden Dienstdateneinheiten assoziiert ist;
Bestimmen (902), durch die RLC-Protokollschicht aus einer Anzeige, die von einer Medienzugriffssteuerungs-, MAC-, und/oder physikalischen, PHY-, Protokollschicht der Vorrichtung empfangen wurde, dass ein Neuübertragungsverfahren eines Datenpakets, das mindestens eine Dienstdateneinheit des Satzes von Dienstdateneinheiten umfasst, abgeschlossen wurde, ohne dass die mindestens eine Dienstdateneinheit erfolgreich empfangen wurde;
Veranlassen (903) von mindestens einer der ersten RLC-Entität oder der zweiten RLC-Entität zu bestimmen, ob mindestens ein Auslöseereignis basierend auf der Bestimmung auftritt; und
wenn die erste RLC-Entität und/oder die zweite RLC-Entität bestimmt, dass das mindestens eine Auslöseereignis aufgetreten ist, Signalisieren (904) an einen Sender des Datenpakets einer Anzeige, dass die mindestens eine Dienstdateneinheit nicht erfolgreich durch die RLC-Protokollschicht empfangen wurde,
**dadurch gekennzeichnet** durch:
Empfangen, von einem Sender des Datenpakets, einer Konfiguration zum Veranlassen der mindestens einen ersten und/oder zweiten RLC-Entität zu bestimmen, ob das mindestens eine Auslöseereignis auftritt, wobei die Konfiguration eine unterschiedliche Konfiguration für jede der ersten und zweiten RLC-Entität zum Bestimmen, ob das mindestens eine Auslöseereignis auftritt, umfasst ; und
Anwenden der empfangenen Konfiguration.

10. Verfahren, das von einer Vorrichtung ausgeführt wird, wobei das Verfahren umfasst:
Bestimmen (1001), für mindestens eine einer ersten und zweiten Funkverbindungssteuerungs-, RLC-, Entität, die durch eine RLC-Protokollschicht der Vorrichtung aufrechterhalten wird, einer Konfiguration für entsprechende erste und zweite Funk-RLC-Entitäten, die durch eine RLC-Protokollschicht eines Empfängers aufrechterhalten werden und mit einem jeweiligen Satz von zu bestätigenden Dienstdateneinheiten assoziiert sind, wobei die Konfiguration dafür ist, die mindestens eine erste und/oder zweite RLC-Entität beim Empfänger zu veranlassen zu bestimmen, ob mindestens ein Auslöseereignis auftritt, als Reaktion darauf, dass der Empfänger bestimmt, dass ein Neuübertragungsmechanismus, der auf einer Medienzugriffssteuerungs-, MAC-, Protokollschicht und/oder physikalischen, PHY-, Protokollschicht für ein Datenpaket, das mindestens eine Dienstdateneinheit des Satzes von Dienstdateneinheiten umfasst, durchgeführt wurde, abgeschlossen wurde, ohne dass die mindestens eine Dienstdateneinheit erfolgreich empfangen wurde, wobei die Konfiguration eine unterschiedliche Konfiguration für jede der ersten und zweiten RLC-Entität zum Bestimmen, ob das mindestens eine Auslöseereignis auftritt, umfasst; und
Bereitstellen (1002) der Konfiguration an den Empfänger.

11. Computerprogramm, umfassend Anweisungen, die, wenn das Programm von einem Computer einer Vorrichtung ausgeführt wird, die Vorrichtung veranlassen auszuführen:
Aufrechterhalten (901), auf einer Funkverbindungssteuerungs-, RLC-, Protokollschicht der Vorrichtung, von mindestens einer ersten RLC-Entität und einer zweiten RLC-Entität, wobei jede der ersten und zweiten RLC-Entitäten mit einem jeweiligen Satz von zu bestätigenden Dienstdateneinheiten assoziiert ist;
Bestimmen (902), durch die RLC-Protokollschicht aus einer Anzeige, die von einer Medienzugriffssteuerungs-, MAC-, und/oder physikalischen, PHY-, Protokollschicht der Vorrichtung empfangen wurde, dass ein Neuübertragungsverfahren eines Datenpakets, das mindestens eine Dienstdateneinheit des Satzes von Dienstdateneinheiten umfasst, abgeschlossen wurde, ohne dass die mindestens eine Dienstdateneinheit erfolgreich empfangen wurde;
Veranlassen (903) von mindestens einer der ersten RLC-Entität oder der zweiten RLC-Entität zu bestimmen, ob mindestens ein Auslöseereignis basierend auf der Bestimmung auftritt; und
wenn die erste RLC-Entität und/oder die zweite RLC-Entität bestimmt, dass das mindestens eine Auslöseereignis aufgetreten ist, Signalisieren (904) an einen Sender des Datenpakets einer Anzeige, dass die mindestens eine Dienstdateneinheit nicht erfolgreich durch die RLC-Protokollschicht empfangen wurde,
**dadurch gekennzeichnet, dass** die Anweisungen ferner konfiguriert sind, die Vorrichtung zu veranlassen auszuführen:
Empfangen, von einem Sender des Datenpakets, einer Konfiguration zum Veranlassen der mindestens einen ersten und/oder zweiten RLC-Entität zu bestimmen, ob das mindestens eine Auslöseereignis auftritt, wobei die Konfiguration eine unterschiedliche Konfiguration für jede der ersten und zweiten RLC-Entität zum Bestimmen, ob das mindestens eine Auslöseereignis auftritt, umfasst; und
Anwenden der empfangenen Konfiguration.

12. Computerprogramm, umfassend Anweisungen, die, wenn das Programm von einem Computer einer Vorrichtung ausgeführt wird, die Vorrichtung veranlassen auszuführen:
Bestimmen (1001), für mindestens eine einer ersten und zweiten Funkverbindungssteuerungs-, RLC-, Entität, die durch eine RLC-Protokollschicht der Vorrichtung aufrechterhalten wird, einer Konfiguration für entsprechende erste und zweite Funk-RLC-Entitäten, die durch eine RLC-Protokollschicht eines Empfängers aufrechterhalten werden und mit einem jeweiligen Satz von zu bestätigenden Dienstdateneinheiten assoziiert sind,
wobei die Konfiguration dafür ist, die mindestens eine erste und/oder zweite RLC-Entität beim Empfänger zu veranlassen zu bestimmen, ob mindestens ein Auslöseereignis auftritt, als Reaktion darauf, dass der Empfänger bestimmt, dass ein Neuübertragungsmechanismus, der auf einer Medienzugriffssteuerungs-, MAC-, Protokollschicht und/oder physikalischen, PHY-, Protokollschicht für ein Datenpaket, das mindestens eine Dienstdateneinheit des Satzes von Dienstdateneinheiten umfasst, durchgeführt wurde, abgeschlossen wurde, ohne dass die mindestens eine Dienstdateneinheit erfolgreich empfangen wurde, wobei die Konfiguration eine unterschiedliche Konfiguration für jede der ersten und zweiten RLC-Entität zum Bestimmen, ob das mindestens eine Auslöseereignis auftritt, umfasst; und
Bereitstellen (1002) der Konfiguration an den Empfänger.

## Revendications

1. Appareil comprenant des moyens pour exécuter :
le maintien (901), au niveau d'une couche de protocole de contrôle de liaison radio, RLC, de l'appareil, d'au moins une première entité RLC et d'une seconde entité RLC, chacune des première et seconde entités RLC étant associée à un ensemble respectif d'unités de données de service à acquitter ;
la détermination (902), par la couche de protocole RLC à partir d'une indication reçue d'une couche de protocole de contrôle d'accès au support, MAC, et/ou de couche de protocole physique, PHY, de l'appareil, qu'une procédure de retransmission d'un paquet de données comprenant au moins une unité de données de service de l'ensemble d'unités de données de service a été complétée sans que ladite au moins une unité de données de service ait été reçue avec succès ;
le déclenchement (903) d'au moins une de la première entité RLC ou de la seconde entité RLC pour déterminer si au moins un événement déclencheur se produit sur la base de la détermination ; et
lorsque la première entité RLC et/ou la seconde entité RLC détermine que ledit au moins un événement déclencheur s'est produit, la signalisation (904) à un émetteur du paquet de données d'une indication que ladite au moins une unité de données de service n'a pas été reçue avec succès par la couche de protocole RLC,
**caractérisé en ce qu'**il comprend en outre des moyens pour exécuter :
la réception, en provenance d'un émetteur du paquet de données, d'une configuration pour amener ladite au moins une première et/ou seconde entité RLC à déterminer si ledit au moins un événement déclencheur se produit, dans lequel la configuration comprend une configuration différente pour chacune de la première et de la seconde entité RLC pour déterminer si ledit au moins un événement déclencheur se produit ; et
l'application de la configuration reçue.

2. Appareil selon la revendication 1, dans lequel ledit au moins un événement déclencheur comprend au moins un parmi :
une détermination qu'une unité de données de service d'un desdits ensembles d'unités de données de service a été reçue et comprend un numéro de séquence qui est hors séquence par rapport à un numéro de séquence attendu pour être reçu pour cet ensemble d'unités de données de service ; ou
une détermination qu'une temporisation qui a été démarrée en réponse à la réception de l'indication de la couche de protocole MAC et/ou PHY a expiré.

3. Appareil selon l'une quelconque des revendications précédentes, dans lequel les moyens pour déterminer qu'une procédure de retransmission d'un paquet de données comprenant ladite au moins une unité de données de service de l'ensemble d'unités de données de service a été complétée sans que ladite au moins une unité de données de service ait été reçue avec succès comprennent des moyens pour :
recevoir une indication du niveau de protocole MAC et/ou PHY qui indique qu'un nombre maximal de retransmissions du paquet de données a été effectué au niveau MAC et/ou PHY ; et/ou
recevoir une indication d'ordonnancement qui indique qu'aucune ressource n'a été allouée pour la retransmission du paquet de données.

4. Appareil selon l'une quelconque des revendications précédentes, dans lequel, pour chacun desdits ensembles respectifs, les unités de données de service comprises dans cet ensemble respectif sont associées à un ordre de séquence de réception qui indique un ordre dans lequel lesdites unités de données de service sont attendues pour être reçues au sein de leur ensemble respectif, et dans lequel le déclenchement d'au moins une de la première entité RLC ou de la seconde entité RLC pour déterminer si ledit au moins un événement déclencheur se produit est exécuté avant que la couche de protocole RLC reçoive une unité de données de service hors séquence par rapport aux unités de données de service déjà reçues par la couche de protocole RLC.

5. Appareil selon l'une quelconque des revendications précédentes, comprenant en outre des moyens pour exécuter :
la détermination si une temporisation est en cours d'exécution qui interdit la transmission de la signalisation à l'émetteur de l'indication que ladite au moins une unité de données de service n'a pas été reçue avec succès par la couche de protocole RLC ; et
le report de la transmission de ladite signalisation à l'émetteur jusqu'à l'expiration de ladite temporisation.

6. Appareil selon l'une quelconque des revendications 1 à 4, comprenant en outre des moyens pour exécuter :
la transmission de ladite signalisation de l'indication que ladite au moins une unité de données de service n'a pas été reçue avec succès par la couche de protocole RLC indépendamment du fait qu'une temporisation est en cours d'exécution qui interdit la transmission de la signalisation à l'émetteur de l'indication que ladite au moins une unité de données de service n'a pas été reçue avec succès par la couche de protocole RLC.

7. Appareil comprenant des moyens pour exécuter :
la détermination (1001), pour au moins une d'une première et d'une seconde entité de contrôle de liaison radio, RLC, maintenue par une couche de protocole RLC de l'appareil, d'une configuration pour des première et seconde entités RLC radio correspondantes maintenues par une couche de protocole RLC d'un récepteur et associées à un ensemble respectif d'unités de données de service à acquitter,
dans laquelle la configuration est pour amener ladite au moins une première et/ou seconde entité RLC au niveau du récepteur à déterminer si au moins un événement déclencheur se produit en réponse au récepteur déterminant qu'un mécanisme de retransmission exécuté au niveau d'une couche de protocole de contrôle d'accès au support, MAC, et/ou de couche de protocole physique, PHY, pour un paquet de données comprenant au moins une unité de données de service de l'ensemble d'unités de données de service a été complété sans que ladite au moins une unité de données de service ait été reçue avec succès, dans laquelle la configuration comprend une configuration différente pour chacune de la première et de la seconde entité RLC pour déterminer si ledit au moins un événement déclencheur se produit ; et
la fourniture (1002) de la configuration au récepteur.

8. Appareil selon l'une quelconque des revendications précédentes, dans lequel la configuration comprend une indication pour initier une temporisation et/ou une indication qu'un ordre de numéros de séquence doit être surveillé pour détecter si une unité de données de service est reçue hors séquence.

9. Méthode exécutée par un appareil, la méthode comprenant :
le maintien (901), au niveau d'une couche de protocole de contrôle de liaison radio, RLC, de l'appareil, d'au moins une première entité RLC et d'une seconde entité RLC, chacune des première et seconde entités RLC étant associée à un ensemble respectif d'unités de données de service à acquitter ;
la détermination (902), par la couche de protocole RLC à partir d'une indication reçue d'une couche de protocole de contrôle d'accès au support, MAC, et/ou de couche de protocole physique, PHY, de l'appareil, qu'une procédure de retransmission d'un paquet de données comprenant au moins une unité de données de service de l'ensemble d'unités de données de service a été complétée sans que ladite au moins une unité de données de service ait été reçue avec succès ;
le déclenchement (903) d'au moins une de la première entité RLC ou de la seconde entité RLC pour déterminer si au moins un événement déclencheur se produit sur la base de la détermination ; et
lorsque la première entité RLC et/ou la seconde entité RLC détermine que ledit au moins un événement déclencheur s'est produit, la signalisation (904) à un émetteur du paquet de données d'une indication que ladite au moins une unité de données de service n'a pas été reçue avec succès par la couche de protocole RLC,
**caractérisée par** :
la réception, en provenance d'un émetteur du paquet de données, d'une configuration pour amener ladite au moins une première et/ou seconde entité RLC à déterminer si ledit au moins un événement déclencheur se produit, dans laquelle la configuration comprend une configuration différente pour chacune de la première et de la seconde entité RLC pour déterminer si ledit au moins un événement déclencheur se produit ; et
l'application de la configuration reçue.

10. Méthode exécutée par un appareil, la méthode comprenant :
la détermination (1001), pour au moins une d'une première et d'une seconde entité de contrôle de liaison radio, RLC, maintenue par une couche de protocole RLC de l'appareil, d'une configuration pour des première et seconde entités RLC radio correspondantes maintenues par une couche de protocole RLC d'un récepteur et associées à un ensemble respectif d'unités de données de service à acquitter, dans laquelle la configuration est pour amener ladite au moins une première et/ou seconde entité RLC au niveau du récepteur à déterminer si au moins un événement déclencheur se produit en réponse au récepteur déterminant qu'un mécanisme de retransmission exécuté au niveau d'une couche de protocole de contrôle d'accès au support, MAC, et/ou de couche de protocole physique, PHY, pour un paquet de données comprenant au moins une unité de données de service de l'ensemble d'unités de données de service a été complété sans que ladite au moins une unité de données de service ait été reçue avec succès, dans laquelle la configuration comprend une configuration différente pour chacune de la première et de la seconde entité RLC pour déterminer si ledit au moins un événement déclencheur se produit ; et
la fourniture (1002) de la configuration au récepteur.

11. Programme d'ordinateur comprenant des instructions qui, lorsque le programme est exécuté par un ordinateur d'un appareil, amènent l'appareil à exécuter :
le maintien (901), au niveau d'une couche de protocole de contrôle de liaison radio, RLC, de l'appareil, d'au moins une première entité RLC et d'une seconde entité RLC, chacune des première et seconde entités RLC étant associée à un ensemble respectif d'unités de données de service à acquitter ;
la détermination (902), par la couche de protocole RLC à partir d'une indication reçue d'une couche de protocole de contrôle d'accès au support, MAC, et/ou de couche de protocole physique, PHY, de l'appareil, qu'une procédure de retransmission d'un paquet de données comprenant au moins une unité de données de service de l'ensemble d'unités de données de service a été complétée sans que ladite au moins une unité de données de service ait été reçue avec succès ;
le déclenchement (903) d'au moins une de la première entité RLC ou de la seconde entité RLC pour déterminer si au moins un événement déclencheur se produit sur la base de la détermination ; et
lorsque la première entité RLC et/ou la seconde entité RLC détermine que ledit au moins un événement déclencheur s'est produit, la signalisation (904) à un émetteur du paquet de données d'une indication que ladite au moins une unité de données de service n'a pas été reçue avec succès par la couche de protocole RLC,
**caractérisé par** les instructions étant en outre configurées pour amener l'appareil à exécuter :
la réception, en provenance d'un émetteur du paquet de données, d'une configuration pour amener ladite au moins une première et/ou seconde entité RLC à déterminer si ledit au moins un événement déclencheur se produit, dans laquelle la configuration comprend une configuration différente pour chacune de la première et de la seconde entité RLC pour déterminer si ledit au moins un événement déclencheur se produit ; et
l'application de la configuration reçue.

12. Programme d'ordinateur comprenant des instructions qui, lorsque le programme est exécuté par un ordinateur d'un appareil, amènent l'appareil à exécuter :
la détermination (1001), pour au moins une d'une première et d'une seconde entité de contrôle de liaison radio, RLC, maintenue par une couche de protocole RLC de l'appareil, d'une configuration pour des première et seconde entités RLC radio correspondantes maintenues par une couche de protocole RLC d'un récepteur et associées à un ensemble respectif d'unités de données de service à acquitter,
dans laquelle la configuration est pour amener ladite au moins une première et/ou seconde entité RLC au niveau du récepteur à déterminer si au moins un événement déclencheur se produit en réponse au récepteur déterminant qu'un mécanisme de retransmission exécuté au niveau d'une couche de protocole de contrôle d'accès au support, MAC, et/ou de couche de protocole physique, PHY, pour un paquet de données comprenant au moins une unité de données de service de l'ensemble d'unités de données de service a été complété sans que ladite au moins une unité de données de service ait été reçue avec succès,
dans laquelle la configuration comprend une configuration différente pour chacune de la première et de la seconde entité RLC pour déterminer si ledit au moins un événement déclencheur se produit ; et
la fourniture (1002) de la configuration au récepteur.
